(19) Europäisches Patentamt
European Patent Office
Office européen des brevets

(11) **EP 4 628 849 A1**

(12) **EUROPEAN PATENT APPLICATION**
published in accordance with Art. 153(4) EPC

(43) Date of publication:
**08.10.2025 Bulletin 2025/41**

(21) Application number: **23947039.6**

(22) Date of filing: **31.07.2023**

(51) International Patent Classification (IPC):
**G01D 5/16** (2006.01)     **G01B 7/28** (2006.01)
**G01B 7/16** (2006.01)     **G01B 7/30** (2006.01)

(52) Cooperative Patent Classification (CPC):
**G01B 7/16; G01B 7/28; G01B 7/30; G01D 5/16**

(86) International application number:
**PCT/CN2023/110335**

(87) International publication number:
**WO 2025/025090 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Shokz Co., Ltd.
Shenzhen, Guangdong 518108 (CN)**

(72) Inventors:
• **DENG, Wenjun
  Shenzhen, Guangdong 518108 (CN)**
• **HUANG, Yujia
  Shenzhen, Guangdong 518108 (CN)**
• **YUAN, Yongshuai
  Shenzhen, Guangdong 518108 (CN)**
• **ZHOU, Wenbing
  Shenzhen, Guangdong 518108 (CN)**

(74) Representative: **Wang, Bo
  Panovision IP
  Ebersberger Straße 3
  85570 Markt Schwaben (DE)**

(54) **SENSOR**

(57)    The present disclosure relates to a sensor, including: a flexible substrate (11) and a first sensing structure (12), wherein the first sensing structure (12) includes a multilayer structure disposed on a side surface of the flexible substrate (11) along a thickness direction; and each layer of the multilayer structure of the first sensing structure (12) is stacked along the thickness direction of the flexible substrate (11); and the multilayer structure of the first sensing structure (12) includes a first conductive layer (121) and a second conductive layer (122) which are disposed adjacent to each other; the second conductive layer (122) is disposed between the first conductive layer (121) and the flexible substrate (11); and a resistance of the second conductive layer (122) changes with a deformation of the flexible substrate (11).

FIG. 1A

**Description**

**TECHNICAL FIELD**

The present disclosure relates to the technical field of electronic components, and particularly relates to a sensor.

**BACKGROUND**

With the gradual maturity of augmented reality/ virtual reality (AR/VR) technologies and the rise of the metaverse concept, intelligent wearable devices have placed higher demands on human-computer interaction technologies. Sensors can be integrated onto intelligent wearable devices (e.g., motion capture suits, electromyography suits, motion capture gloves, or the like) and enable accurate recognition and reconstruction of human body movements by sensing bending conditions. As one of the key underlying technologies of the metaverse, sensors have attracted widespread attention and research.

Therefore, how to improve the accuracy and convenience of detecting bending conditions using sensors is a technical problem urgently to be solved in the art.

**SUMMARY**

Some embodiments of the present disclosure provide a sensor, which comprises: a flexible substrate and a first sensing structure, wherein the first sensing structure includes a multilayer structure disposed on a side surface of the flexible substrate along a thickness direction; and each layer of the multilayer structure of the first sensing structure is stacked along the thickness direction of the flexible substrate; and the multilayer structure of the first sensing structure includes a first conductive layer and a second conductive layer which are adjacently arranged in sequence; the second conductive layer is disposed between the first conductive layer and the flexible substrate; and a resistance of the second conductive layer changes with a deformation of the flexible substrate.

In some embodiments, the resistance between two surfaces of the second conductive layer which are spaced apart along the thickness direction of the flexible substrate is in a range of 1 MΩ to 10 GΩ.

In some embodiments, an electrical conductivity of the first conductive layer and an electrical conductivity of the flexible substrate are greater than an electrical conductivity of the second conductive layer; and the second conductive layer is disposed adjacent to the flexible substrate.

In some embodiments, the multilayer structure further includes a third conductive layer, the first conductive layer, the second conductive layer, and the third conductive layer are adjacently arranged in sequence along the thickness direction of the flexible substrate; the second conductive layer and the third conductive layer are both disposed between the first conductive layer and the flexible substrate; and an electrical conductivity of the first conductive layer and an electrical conductivity of the third conductive layer are greater than an electrical conductivity of the second conductive layer; and an electrical conductivity of the flexible substrate is less than or equal to the electrical conductivity of the second conductive layer.

In some embodiments, a parameter related to resistance of the second conductive layer is read by a processing circuit.

In some embodiments, a relative dielectric constant of the second conductive layer is greater than 3.

In some embodiments, a parameter related to capacitance and resistance of the second conductive layer are read by a processing circuit.

In some embodiments, the multilayer structure further includes another first conductive layer and another second conductive layer; an electrical conductivity of the flexible substrate, an electrical conductivity of the first conductive layer, and an electrical conductivity of the another first conductive layer are greater than an electrical conductivity of the second conductive layer and are greater than an electrical conductivity of the another second conductive layer; and the first conductive layer, the second conductive layer, the another first conductive layer, and the another second conductive layer are adjacently arranged in sequence along the thickness direction of the flexible substrate; and the another second conductive layer is disposed adjacent to the flexible substrate.

In some embodiments, the first conductive layer and the flexible substrate are grounded; and the another first conductive layer is connected to a voltage output device of a processing circuit via a fixed resistor.

In some embodiments, the multilayer structure further includes another first conductive layer, another second conductive layer, and a fifth conductive layer; the first conductive layer, the second conductive layer, the another first conductive layer, the another second conductive layer, and the fifth conductive layer are adjacently arranged in sequence along the thickness direction of the flexible substrate; and an electrical conductivity of the flexible substrate is less than or equal to an electrical conductivity of the second conductive layer and is less than or equal to an electrical conductivity of the another second conductive layer; an electrical conductivity of the first conductive layer, an electrical conductivity of the fifth conductive layer, and an electrical conductivity of the another first conductive layer are greater than the electrical conductivity of the second conductive layer and are greater than the electrical conductivity of the another second conductive layer.

In some embodiments, the first conductive layer and the fifth conductive layer are grounded, and a lead wire extending from the another first conductive layer is connected to a voltage output device of a processing circuit through a fixed resistor.

In some embodiments, a relative dielectric constant of the another second conductive layer is greater than 3.

In some embodiments, the flexible substrate is made of an insulating material.

In some embodiments, parameters related to capacitance and resistance of the second conductive layer and the another second conductive layer are read by the processing circuit.

In some embodiments, the voltage output device of the processing circuit outputs a pulse voltage, and the parameters related to capacitance and resistance include voltage values at a plurality of time points.

In some embodiments, an amplitude of a saturation voltage on the second conductive layer is smaller than an amplitude of the pulse voltage.

In some embodiments, the sensor further comprises a second sensing structure, wherein: the second sensing structure includes a multilayer structure disposed on another side surface of the flexible substrate along the thickness direction; each layer of the multilayer structure of the second sensing structure is stacked along the thickness direction of the flexible substrate; and the multilayer structure of the second sensing structure includes a first conductive layer and a second conductive layer, the first conductive layer and the second conductive layer of the second sensing structure are adjacently arranged; an electrical conductivity of the first conductive layer of the second sensing structure is greater than an electrical conductivity of the second conductive layer of the second sensing structure, and the second conductive layer of the second sensing structure is disposed between the first conductive layer of the second sensing structure and the flexible substrate; and a resistance of the second conductive layer of the second sensing structure changes with the deformation of the flexible substrate.

In some embodiments, detection parameters of the first sensing structure and the second sensing structure are read respectively by a processing circuit; wherein the detection parameters include a parameter related to resistance of the second conductive layer of the first sensing structure or a parameter related to capacitance and resistance of the second conductive layer of the first sensing structure or a parameter related to resistance of the second conductive layer of the second sensing structure or a parameter related to capacitance and resistance of the second conductive layer of the second sensing structure; and the processing circuit is configured to perform differential processing on the detection parameters of the first sensing structure and the second sensing structure and determine a deformation parameter of the flexible substrate based on a result of the differential processing.

In some embodiments, an amplitude of a saturation voltage of the second conductive layer of the first sensing structure is different from an amplitude of a saturation voltage of the second conductive layer of the second sensing structure.

In some embodiments, the sensor further comprises a third sensing structure and a fourth sensing structure; wherein: the third sensing structure includes a multilayer structure disposed on a side surface of the flexible substrate along a width direction; the fourth sensing structure includes a multilayer structure disposed on another side surface of the flexible substrate along the width direction; each layer of the multilayer structure of the third sensing structure is stacked along the width direction of the flexible substrate, and each layer of the multilayer structure of the fourth sensing structure is stacked along the width direction of the flexible substrate; and the multilayer structures of the third sensing structure and the fourth sensing structure both include a sixth conductive layer and a seventh conductive layer, and the sixth conductive layer and the seventh conductive layer are adjacently arranged; an electrical conductivity of the sixth conductive layer is greater than an electrical conductivity of the seventh conductive layer, and the seventh conductive layer is disposed between the sixth conductive layer and the flexible substrate; and a resistance of the seventh conductive layer changes with the deformation of the flexible substrate.

In some embodiments, the width direction is perpendicular to the thickness direction.

In some embodiments, a ratio of a thickness to a width of the flexible substrate is in a range of 0.3 to 3.

In some embodiments, each of the first conductive layer, the second conductive layer, and the flexible substrate includes an elastic material.

In some embodiments, the elastic material of the first conductive layer and the elastic material of the second conductive layer are both filled with conductive particles; a density of the conductive particles filled in the elastic material of the first conductive layer is greater than a density of the conductive particles filled in the elastic material of the second conductive layer.

In some embodiments, a thickness of the first conductive layer is in a range of 5 um to 150 um; or a thickness of the second conductive layer is in a range of 5 um to 150 um; or a thickness of the flexible substrate is in a range of 300 um to 5000 um.

In some embodiments, a width of the first conductive layer is less than or equal to a width of the second conductive layer; and the width of the second conductive layer is less than or equal to a width of the flexible substrate.

In some embodiments, the sensor further comprises a first protection structure, wherein the first protection structure covers a side of the first conductive layer away from the flexible substrate.

In some embodiments, an exposed surface of the flexible substrate is covered with a second protection structure.

## BRIEF DESCRIPTION OF THE DRAWINGS

The present disclosure will be further described by way of exemplary embodiments, which will be described in detail with reference to the accompanying drawings. These embodiments are not limiting, and in the embodiments, the same reference numerals refer to the same structures, in which:

FIG. 1A is a schematic diagram illustrating a cross-section of a sensor according to some embodiments of the present disclosure;

FIG. 1B is a schematic diagram illustrating a cross-section of a sensor having two sensing structures according to some embodiments of the present disclosure;

FIG. 2A is a schematic diagram illustrating a resistance variation principle of the sensor shown in FIG. 1A;

FIG. 2B is a schematic diagram illustrating a resistance variation principle of the sensor shown in FIG. 1B;

FIG. 2C is a schematic diagram illustrating wrinkles on a sensor.

FIG. 3 is a schematic diagram illustrating an equivalent circuit of the sensor shown in FIG. 1B;

FIG. 4A is a schematic diagram illustrating a cross-section of a sensor according to other embodiments of the present disclosure;

FIG. 4B is a schematic diagram illustrating a cross-section of a sensor having two sensing structures according to other embodiments of the present disclosure;

FIG. 5A is a schematic diagram illustrating a cross-section of a sensor according to other embodiments of the present disclosure;

FIG. 5B is a schematic diagram illustrating a cross-section of a sensor having two sensing structures according to other embodiments of the present disclosure;

FIG. 6A is a schematic diagram illustrating an equivalent circuit of the sensor shown in FIG. 5A;

FIG. 6B is a schematic diagram illustrating an equivalent circuit of the sensor shown in FIG. 5B.

FIG. 7A is a schematic diagram illustrating a cross-section of a sensor according to other embodiments of the present disclosure;

FIG. 7B is a schematic diagram illustrating a cross-section of a sensor having two sensing structures according to other embodiments of the present disclosure;

FIG. 8A is a schematic diagram illustrating an equivalent circuit of the sensor shown in FIG. 7A;

FIG. 8B is a schematic diagram illustrating an equivalent circuit of the sensor shown in FIG. 7B;

FIG. 9A is a schematic diagram illustrating a cross-section of a sensor according to other embodiments of the present disclosure;

FIG. 9B is a schematic diagram illustrating a cross-section of a sensor having two sensing structures according to other embodiments of the present disclosure.

FIG. 10 is a schematic diagram illustrating an output voltage according to some embodiments of the present disclosure; and

FIGs. 11A-11C are schematic diagrams illustrating a cross-section of a sensor having four sensing structures according to some embodiments of the present disclosure.

## DETAILED DESCRIPTION

In order to more clearly illustrate the technical solutions of the embodiments of the present disclosure, a brief introduction to the accompanying drawings used in the description of the embodiments is provided below. Obviously, the accompanying drawings described below are merely some examples or embodiments of the present disclosure. Those skilled in the art can apply the present disclosure to other similar situations without any inventive efforts based on these drawings. It should be understood that these exemplary embodiments are provided merely to help those skilled in the art better understand and implement the present disclosure, and are not intended to limit the scope of the present disclosure in any way. Unless clearly indicated by context or otherwise specified, the same reference numerals in the figures denote the same structures or operations.

As used in the present disclosure and the claims, unless the context clearly indicates otherwise, the terms "a," "an," "one," and/or "the" are not intended to indicate singularity only, but may also include plural forms. In general, the terms "include" and "comprise" indicate that the listed steps and elements are included but not exhaustive, and the method or device may also include other steps or elements. The term "based on" means "at least partially based on." The phrase "one embodiment" means "at least one embodiment," and "another embodiment" means "at least one other embodiment."

In the description of the present disclosure, it should be understood that terms such as "thickness direction" and "width direction" used to indicate orientation or positional relationships are based on the orientations or positional relationships shown in the drawings. they are provided merely for convenience of description and simplification, and are not intended to indicate or imply that the devices or components must be constructed or operated in a particular orientation. Therefore, these terms should not be construed as limiting the present disclosure.

In addition, the terms "first" and "second" are used only for the purpose of distinguishing features and should not be construed as indicating or implying relative importance or implying the number of the indicated technical features. Thus, features defined with "first" and "second" may explicitly or implicitly include at least one such feature. In the description of the present disclosure, the term "a plurality of" means at least two, for example, two or three, unless explicitly defined otherwise.

Some embodiments of the present disclosure provide a sensor. The sensor may be disposed on an intelligent wearable device (e.g., a motion capture suit, an electromyography suit, a motion capture glove, or the like). Movements of a user wearing the intelligent wearable device may cause a deformation of the intelligent wearable device, thereby causing a deformation of the sensor (e.g., bending, stretching, compression, or the like). In some embodiments, the sensor may be a flexible sensor, which refers to a sensor that is more likely to undergo a deformation under an external force. By sensing a deformation condition of itself, the sensor can enable accurate recognition and reconstruction of human body movements. For example, the sensor may sense a bending condition (e.g., a bending angle and a bending direction) thereof, thereby enabling accurate recognition and reconstruction of human body movements.

A first sensing structure is disposed on a side surface of a flexible substrate of the sensor along a thickness direction. The flexible substrate is capable of undergoing a bending deformation along with a deformation of the intelligent wearable device. The first sensing structure may include a multilayer structure disposed on the side surface of the flexible substrate along the thickness direction, and the multilayer structure includes a first conductive layer and a second conductive layer that are adjacently arranged in sequence. When the flexible substrate undergoes a bending deformation, the second conductive layer may be deformed, and a resistance of the second conductive layer may change with a deformation of the flexible substrate. Therefore, a change in the resistance of the second conductive layer or a change in a parameter related to the resistance of the second conductive layer, may reflect a bending condition (e.g., a bending angle and a bending direction) of the sensor. According to the change in the resistance or in the parameter related to the resistance, the bending condition of the sensor can be sensed with relatively high accuracy. In addition, since the first conductive layer is disposed adjacent to the second conductive layer, the first conductive layer may serve as an electrode to extract signals for collecting the parameter related to the resistance of the second conductive layer. The collection of the parameter related to the resistance of the second conductive layer is very simple, which also contributes to high convenience in detecting the bending condition of the sensor.

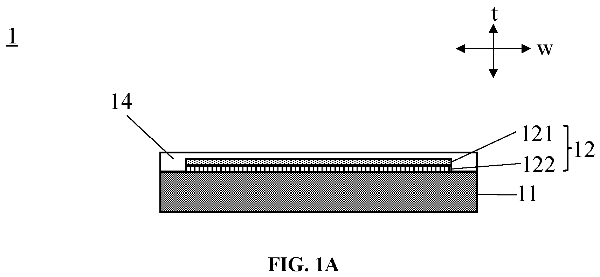

FIG. 1A is a schematic diagram illustrating a cross-section of a sensor according to some embodiments of the present disclosure. In some embodiments, as shown in FIG. 1A, a sensor 1 includes a flexible substrate 11 and a first sensing structure 12. The first sensing structure 12 includes a multilayer structure disposed on a side surface of the flexible substrate 11 along a thickness direction. Each layer of the multilayer structure of the first sensing structure 12 is stacked along the thickness direction of the flexible substrate 11. The multilayer structure of the first sensing structure 12 includes a first conductive layer 121 and a second conductive layer 122. The first conductive layer 121 and the second conductive layer 122 are disposed adjacent to each other. The second conductive layer 122 is disposed between the first conductive layer 121 and the flexible substrate 11. A resistance of the second conductive layer 122 changes with a deformation of the flexible substrate 11.

The thickness direction of the flexible substrate 11 may correspond to a t-direction shown in the figures (e.g., FIG. 1A). The first sensing structure 12 includes a plurality of layered structures. The each layer of the multilayer structure of the first sensing structure 12 is stacked along the thickness direction of the flexible substrate 11 may be understood as follows: each layer of the plurality of layered structures of the first sensing structure 12 is arranged along the thickness direction of the flexible substrate 11 and is stacked together.

The flexible substrate 11 may serve as a supporting substrate to provide support for the first sensing structure 12. The flexible substrate 11 may include a flexible material. Due to the property of the flexible substrate 11, the flexible substrate 11 is prone to deformation (e.g., bending deformation) when subjected to an external force. The first sensing structure 12 is a sensing structure configured to measure the bending deformation of the sensor 1. The first conductive layer 121 and the second conductive layer 122 are a layered structure made of a conductive material or filled with a conductive material during fabrication. In some embodiments, the first conductive layer 121 and the second conductive layer 122 may also include a flexible material, and the first conductive layer 121 and the second conductive layer 122 may deform together with the flexible substrate 11. In some embodiments, conductive particles may be filled into the flexible material to form the first conductive layer 121 and the second conductive layer 122 which are capable of conducting electricity. The type and proportion of conductive particles filled in the first conductive layer 121 and the second conductive layer 122 may affect the electrical conductivities of the first conductive layer 121 and the second conductive layer 122. For details, reference may be made to the descriptions below regarding the materials of the first conductive layer 121, the second conductive layer 122, and the flexible substrate 11.

The second conductive layer 122 is disposed between the first conductive layer 121 and the flexible substrate 11 may be understood as follows: in the thickness direction, at least a portion of the first conductive layer 121 and a portion of the flexible substrate 11 are respectively located on two opposite sides of the second conductive layer 122. In the present disclosure, two components being disposed adjacent to each other refers to that the two components are positioned next to each other and electrically connected. The first conductive layer 121 and the second conductive layer 122 are disposed adjacent to each other may be understood as follows: the first conductive layer 121 and the second conductive layer 122 are arranged adjacent to each other in the thickness direction of the flexible substrate 11 and are electrically connected. With such a configuration, the first conductive layer 121 may serve as an electrode to extract signals from the second conductive layer 122, such as signals related to resistance of the second conductive layer 122 or signals related to capacitance and resistance of the second conductive layer 122.

In some embodiments, the electrical conductivity of the first conductive layer 121 is greater than the electrical conductivity of the second conductive layer 122. The electrical conductivity is a parameter used to describe the ease with which electric charges flow in a substance. Since the electrical conductivity of the first conductive layer 121 is greater than the electrical conductivity of the second conductive layer 122, the first conductive layer 121 has better electrical conduction performance. Accordingly, a resistance of the first conductive layer 121 is less than a resistance of the second conductive layer 122. It should be understood that, in the present disclosure, a resistance of a component refers to a resistance between two surfaces of the component which are spaced apart along a thickness direction of the flexible substrate 11. The resistance of the first conductive layer 121 refers to a resistance between two surfaces of the first conductive layer 121 which are spaced apart along the thickness direction of the flexible substrate 11, and the resistance of the second conductive layer 122 refers to a resistance between two surfaces of the second conductive layer 122 which are spaced apart along the thickness direction of the flexible substrate 11. In some embodiments, the electrical conductivity of the first conductive layer 121 may be greater than more than 100 times the electrical conductivity of the second conductive layer 122.

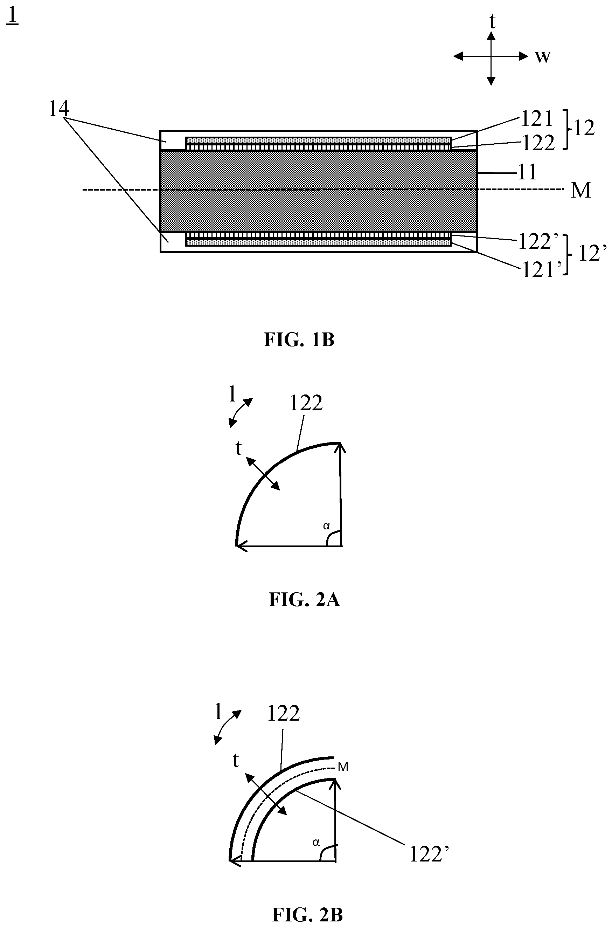

FIG. 2A is a schematic diagram illustrating a resistance variation principle of the sensor shown in FIG. 1A. As shown in FIG. 2A, a resistance value RB1 of the second conductive layer 122 of the first sensing structure 12 changes with a deformation of the flexible substrate 11 according to a principle. The principle is as follows: a resistance R of the second conductive layer (i.e., the resistance value RB1 of the second conductive layer 122 of the first sensing structure 12) is given by the formula $R = \rho(d/S)$, where $\rho$ represents a resistivity of the second conductive layer 122, S represents an area of the second conductive layer 122, and d represents a thickness of the second conductive layer 122. During a bending deformation process of the sensor 1, the resistivity $\rho$ and the thickness d of the second conductive layer 122 are approximately constant, so the resistance value RB1 of the second conductive layer 122 of the first sensing structure 12 is proportional to the area S of the second conductive layer 122. Taking the second conductive layer 122 as a rectangular shape, an initial area S of the second conductive layer 122 is given by $S = w \times L_0$, where w represents a width of the second conductive layer 122, and $L_0$ represents an initial length of the second conductive layer 122. In FIGs. 2A to 2C, an I-direction indicates the length direction, and the width direction is a direction perpendicular to the plane of the paper. Before bending of the sensor 1, the resistance value RB1 of the second conductive layer 122 is $\rho(d/W \times L_0)$. After bending of the sensor 1, the length of the second conductive layer 122 changes (e.g., increases) from $L_0$ to $L_{B1}$, where an increase or decrease in the length of the second conductive layer 122 is determined based on a bending direction, and a specific value of $L_{B1}$ is related to a bending angle $\alpha$. Therefore, after bending of the sensor 1, the resistance value RB1 of the second conductive layer 122 becomes $\rho(d/W \times L_{B1})$.

When the sensor 1 (i.e., the flexible substrate 11) undergoes a bending deformation, a physical shape of the second conductive layer 122 changes accordingly, which results in a change in the resistance of the second conductive layer 122 (for the specific principle, please refer to FIG. 2A and related descriptions). For example, bending of the sensor 1 may cause a change in an area of the second conductive layer 122, thereby changing the resistance of the second conductive layer 122. By collecting the resistance of the second conductive layer 122 or a parameter related to the resistance, and analyzing a change in the resistance or the parameter related to the resistance of the second conductive layer 122, a bending condition (e.g., a bending angle or a bending direction) of the sensor 1 can be sensed with relatively high accuracy. In addition, since the first conductive layer 121 and the second conductive layer 122 are disposed adjacent to each other, the first conductive layer 121 may serve as an electrode to extract signals for collecting the parameter related to the resistance of the second conductive layer 122. The collection of the parameter related to the resistance of the second conductive layer 122 is very simple, which also contributes to high convenience in detecting the bending condition of the sensor 1.

In some embodiments, a resistance between two surfaces of the second conductive layer 122 which are spaced apart along the thickness direction of the flexible substrate 11 may be in a range of 0.8 M$\Omega$ to 15 G$\Omega$. In some embodiments, the resistance between the two surfaces of the second conductive layer 122 which are spaced apart along the thickness direction of the flexible substrate 11 is in a range of 1 M$\Omega$ to 10 G$\Omega$.

By setting the resistance between two surfaces of the second conductive layer 122 which are spaced apart along the thickness direction of the flexible substrate 11 to be in a range of 1 M$\Omega$ to 10 G$\Omega$, the second conductive layer 122 is able to conduct electricity while maintaining a sufficiently large resistance. This configuration ensures the measurement of the resistance of the second conductive layer 122 and the analysis of changes in the resistance, which can accurately reflect the bending condition of the sensor 1.

FIG. 1B is a schematic diagram illustrating a cross-section of a sensor having two sensing structures according to some embodiments of the present disclosure. In some embodiments, as shown in FIG. 1B, the sensor 1 further includes a second sensing structure 12'. The second sensing structure 12' includes a multilayer structure disposed on another side surface of the flexible substrate 11 along the thickness direction; each layer of the multilayer structure of the second sensing structure 12' is stacked along the thickness direction of the flexible substrate 11. In other words, the first sensing structure 12 and the second sensing structure 12' are disposed on two opposite sides of the flexible substrate 11 in the thickness direction.

In some embodiments, the multilayer structure of the second sensing structure 12' also includes a first conductive layer 121' and a second conductive layer 122', the first conductive layer 121' of the second sensing structure 12' and the second conductive layer 122' of the second sensing structure 12' are disposed adjacent to each other; an electrical conductivity of the first conductive layer 121' of the second sensing structure 12' is greater than an electrical conductivity of the second conductive layer 122' of the second sensing structure 12', and the second conductive layer 122' of the second sensing structure 12' is disposed between the first conductive layer 121' of the second sensing structure 12' and the flexible substrate 11; and a resistance of the second conductive layer 122' of the second sensing structure 12' changes with the deformation of the flexible substrate 11. The structure and working principle of the second sensing structure 12' may be similar to those of the first sensing structure 12. For details, reference may be made to the related descriptions of the first sensing structure 12.

In some embodiments, the sensor 1 may have a symmetric structure along the thickness direction of the flexible substrate 11, and an axis of symmetry may be represented by a dashed line M in FIG. 1B. In other words, the first sensing structure 12 and the second sensing structure 12' include the same components, and each component of the first sensing structure 12 and the second sensing structure 12' has the same structure, dimension, or the like.

In other embodiments, both the first sensing structure 12 and the second sensing structure 12' may detect the resistance of the second conductive layer 122 (or the second conductive layer 122') or a parameter related to the resistance. However, the first sensing structure 12 and the second sensing structure 12' may be different. For example, the electrical conductivity of the first conductive layer 121 of the first sensing structure 12 may differ from the electrical conductivity of the first conductive layer 121' of the second sensing structure 12'.

FIG. 2B is a schematic diagram illustrating a resistance variation principle of the sensor 1 shown in FIG. 1B. The principle of resistance variation illustrated in FIG. 2B is similar to the principle illustrated in FIG. 2A, and repeated content is omitted for brevity. As shown in FIG. 2B, the resistance value RB1 of the second conductive layer 122 of the first sensing structure 12 and a resistance value RB1' of the second conductive layer 122' of the second sensing structure 12' both follow the formula: R = $\rho$(d/S), where $\rho$ represents the resistivity of the second conductive layer 122, S represents the area of the second conductive layer 122, and d represents the thickness of the second conductive layer 122. Before bending of the sensor 1, the resistance value of the second conductive layer 122 of the first sensing structure 12 and the resistance value of the second conductive layer 122' of the second sensing structure 12' satisfy: RB1= RB1' =$\rho$(d/W$\times$L$_0$). When the sensor 1 is bent with a bending angle $\alpha$, the length L$_{B1}$ of the second conductive layer 122 of the first sensing structure 12 changes to L$_0$+2$\alpha$*g, and the length L$_{B1}$' of the second conductive layer 122' of the second sensing structure 12' changes to L$_0$-2$\alpha$*g, where g represents a thickness between the first conductive layer 121 or the second conductive layer 122 and the axis of symmetry M of the sensor 1, and L$_0$ represents an initial length of the second conductive layer. In some embodiments, the value of L$_0$ may correspond to a length of the sensor 1 at the position of the axis of symmetry M. Therefore, after bending of the sensor 1, the resistance of the second conductive layer 122 of the first sensing structure 12 is obtained as follows:

$$RB1 = \rho \frac{d}{w(L0+2\alpha*g)} \ (1),$$

and the resistance of the second conductive layer 122' of the second sensing structure 12' is obtained as follows:

$RB1' = \rho \frac{d}{w(L0-2\alpha*g)}$ (2). From the above formulas (1) and (2), it can be seen that the resistance variation trends of the two sensing structures are opposite: the resistance value RB1 of the second conductive layer 122 of the first sensing structure 12 is negatively correlated with the bending angle $\alpha$, while the resistance value RB1' of the second conductive layer 122 of the second sensing structure 12' is positively correlated with the bending angle $\alpha$.

By providing two sensing structures (i.e., the first sensing structure 12 and the second sensing structure 12'), since the resistance variation trends of the two sensing structures are opposite, a total variation in resistance is increased after data processing (e.g., differential processing), thereby enhancing a sensing sensitivity of the sensor 1.

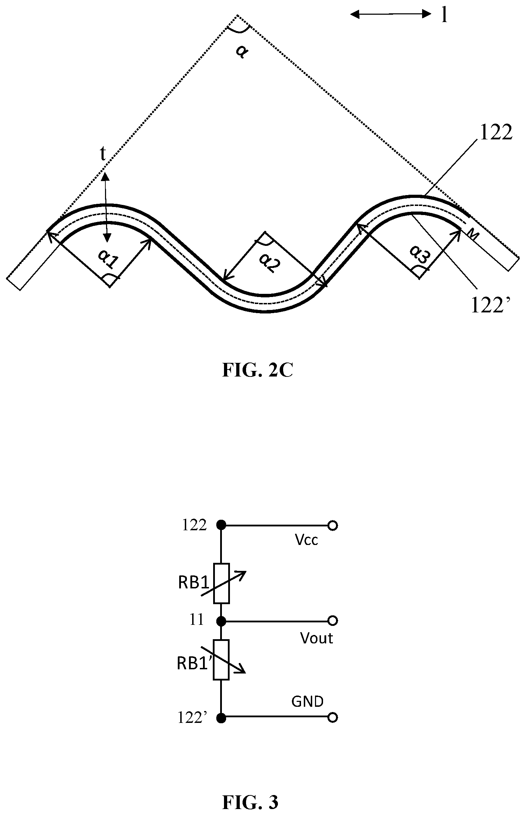

In addition, FIG. 2C is a schematic diagram illustrating wrinkles on the sensor 1. As shown in FIG. 2C, when wrinkling occurs in the sensor (FIG. 2C illustrates wrinkles in the length direction I), the deformation is equivalent to a condition involving a plurality of bends, with bending angles including $\alpha_1$, $\alpha_2$, and $\alpha_3$. According to geometric integration, $\alpha_1$, $\alpha_2$, and $\alpha_3$ do not need to be considered individually; only the angle between the two ends of the sensor is required to be considered. Regardless of whether a plurality of bends occur in the middle section, $L_{B1}=L_0+2\alpha*g$ and $L_{B1'}=L_0-2\alpha*g$ still hold, where $\alpha$ represents the bending angle, and the bending angle $\alpha$ refers to an angle between two ends of the sensor. This demonstrates that the sensor 1 including the first sensing structure 12 and the second sensing structure 12' can effectively prevent the influence of wrinkling.

In addition, by providing two sensing structures, particularly by symmetrically arranging the first sensing structure 12 and the second sensing structure 12' along the thickness direction of the flexible substrate 11, common-mode interference can be effectively eliminated. Merely by way of example, the sensor 1 may undergo not only bending deformation but also stretching and compressing deformation. When the sensor 1 is uniformly stretched or compressed, the first sensing structure 12 and the second sensing structure 12' are stretched or compressed simultaneously. Such stretching or compression of the first sensing structure 12 and the second sensing structure 12' can be regarded as common-mode interference. By providing the two sensing structures and performing differential processing on signals, such common-mode interference can be eliminated, such that the sensor 1 is insensitive to stretching or compressing deformation thereof and is only sensitive to bending deformation thereof, which increases the accuracy of angle sensing of the sensor 1.

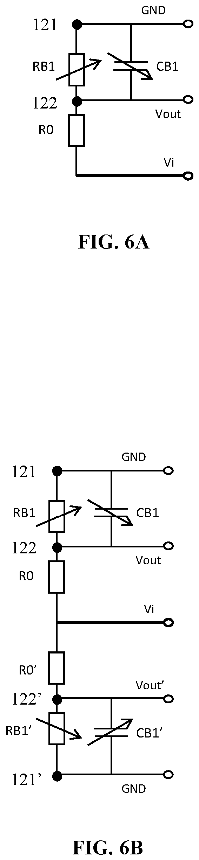

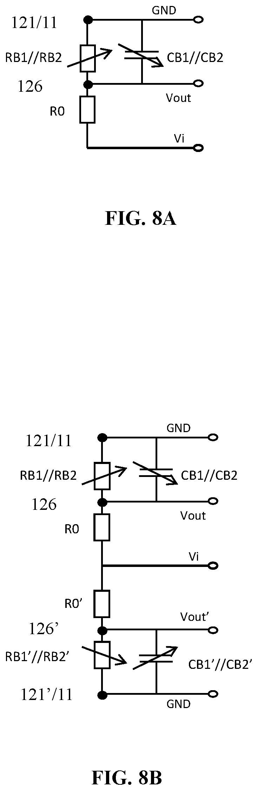

In some embodiments, parameters of the sensor 1 (e.g., a parameter related to resistance of the second conductive layer 122, a parameter related to capacitance and resistance of the second conductive layer 122, a parameter related to the capacitance and the resistance of the second conductive layer 127, etc.) may be read by a processing circuit. The types of parameters read by the processing circuit are related to a structure of the processing circuit, a connection relationship between the processing circuit and the sensor 1, and a structure of the sensor 1. For details, reference may be made to related descriptions below. In some embodiments, the processing circuit may include a signal output device. The signal output device may output an electrical signal (e.g., a voltage signal) to the sensor 1, such that the processing circuit may read parameters fed back from the sensor 1 accordingly. The processing circuit may be a voltage divider circuit, a bridge circuit, a charging/discharging circuit, or the like. In some embodiments, the signal output device may output a direct current (DC) electrical signal to the sensor 1, as shown in the embodiment of FIG. 3. In other embodiments, the signal output device may output an alternating current (AC) electrical signal to the sensor 1, as shown in the embodiments of FIGs. 6A, 6B, 8A, and 8B. Merely by way of example, the signal output device may include a voltage output device. The voltage output device may output a voltage (e.g., a direct voltage or an alternating voltage) to the sensor 1, and the processing circuit may read a feedback voltage from the sensor 1 based on the output voltage. In some embodiments, the voltage output device may output wave signals such as a square wave, a triangle wave, a sine wave, or a pulse wave to the sensor 1.

In some embodiments, detection parameters of the first sensing structure 12 and the second sensing structure 12' may be read respectively by the processing circuit. The detection parameters include a parameter related to resistance of the second conductive layer 122 of the first sensing structure 12; a parameter related to capacitance and resistance of the second conductive layer 122 of the first sensing structure 12; a parameter related to resistance of the second conductive layer 122' of the second sensing structure 12'; or a parameter related to capacitance and resistance of the second conductive layer 122' of the second sensing structure 12'. The processing circuit is configured to perform differential processing on the detection parameters of the first sensing structure 12 and the second sensing structure 12', and determine a deformation parameter of the flexible substrate 11 based on a result of the differential processing. Descriptions regarding specific parameters included in the detection parameters may be found in the related descriptions below.

When the sensor 1 includes two sensing structures (e.g., the first sensing structure 12 and the second sensing structure 12'), the two sensing structures are connected together by the flexible substrate 11, and an external force may be applied to both sensing structures simultaneously. In some embodiments, the processing circuit may perform differential processing on detection parameters of the two sensing structures in the sensing unit to determine a bending condition (e.g., a bending angle or a bending direction) of the flexible substrate 11. The differential processing may be used to eliminate undesired common-mode signals shared between the detection parameters of the sensing structures, thereby amplifying differences between the detection parameters of the two sensing structures. For example, the sensor 1 may undergo stretching or compressing deformation caused by non-bending factors, which may affect the bending detection result and thus reduce the accuracy of sensing bending deformation of the sensor 1. Since such stretching or compressing deformation acts on both sensing structures simultaneously, variations in the detection parameters caused by stretching or compressing may be treated as common-mode signals between the detection parameters of the two sensing structures. The processing circuit may perform differential processing on the detection parameters of the two sensing structures in the sensing unit to filter out such common-mode signals and amplify differential-mode signals, thereby reducing the influence of external factors on sensing and improving the accuracy of sensing bending deformation of the sensor 1. In some embodiments, a differential amplifier may be used by the processing circuit to read related signals (e.g., the parameter related to resistance of the second conductive layer 122 or the parameter related to capacitance and resistance of the second conductive layer 122, as described below).

In some embodiments, the electrical conductivity of the flexible substrate 11 is greater than the electrical conductivity of the second conductive layer 122. The second conductive layer 122 is disposed adjacent to the flexible substrate 11. In some embodiments, a lead wire is extended respectively from the first conductive layer 121 and the flexible substrate 11 to be connected to the processing circuit, so as to read the parameter related to resistance of the second conductive layer 122. Since both the first conductive layer 121 and the flexible substrate 11 are disposed adjacent to the second conductive layer 122, the first conductive layer 121 and the flexible substrate 11 may serve as electrodes for conveniently extracting the parameter related to resistance of the second conductive layer 122.

The configuration that the second conductive layer 122 is disposed adjacent to the flexible substrate 11 may be understood as that the flexible substrate 11 and the second conductive layer 122 are disposed adjacent to each other along the thickness direction of the flexible substrate 11 and are electrically connected. Since the electrical conductivity of the first conductive layer 121 and the electrical conductivity of the flexible substrate 11 are both greater than the electrical conductivity of the second conductive layer 122, when the electrical conductivity of the flexible substrate 11 and the electrical conductivity of the first conductive layer 121 are significantly greater than the electrical conductivity of the second conductive layer 122 (e.g., the electrical conductivity of the first conductive layer 121 and the electrical conductivity of the flexible substrate 11 are both greater than the electrical conductivity of the second conductive layer 122 by more than 100 times), the resistance of the first conductive layer 121 and the resistance of the flexible substrate 11 may be approximately negligible. In such a case, a resistance between the first conductive layer 121 and the flexible substrate 11 is approximately equal to the resistance between two surfaces of the second conductive layer 122 which are spaced apart along the thickness direction of the flexible substrate 11.

In the present embodiment, the flexible substrate 11 may be formed by filling a flexible material with conductive particles. By adjusting a type and proportion of the conductive particles filled within the flexible material, a flexible substrate 11 having different electrical conductivities may be obtained. For further descriptions regarding the flexible substrate 11 of this type, reference may be made to the related descriptions below regarding the material of the flexible substrate 11.

A parameter related to resistance of the second conductive layer 122 may include one or more of a voltage value, a current value, and a resistance value. These parameters are capable of reflecting a change in resistance of the second conductive layer 122 after bending of the sensor 1. The parameter related to resistance of the second conductive layer 122 may be read by a processing circuit (e.g., a voltage divider circuit, a bridge circuit, or the like). A lead wire is extended respectively from the first conductive layer 121 and the flexible substrate 11 to be connected to the processing circuit. When the sensor 1 undergoes bending deformation, the parameter related to resistance of the second conductive layer 122 changes accordingly, and the processing circuit may read a parameter related to resistance of the second conductive layer 122, so as to detect a change in resistance of the second conductive layer 122. In some embodiments, the processing circuit may read a voltage and a current at two ends of the second conductive layer 122, and a ratio of the voltage to the current at two ends of the second conductive layer 122 is determined as the resistance of the second conductive layer 122. When the sensor 1 is bent, a change in the voltage and/or current at two ends of the second conductive layer 122 may be detected by the processing circuit, and a corresponding change in the resistance of the second conductive layer 122 may be determined. In other embodiments, only a voltage value output from the sensor 1 is detected, and the voltage value may directly serve as a parameter related to resistance of the second conductive layer 122 to reflect the change in resistance of the second conductive layer 122.

Merely by way of example, the processing circuit may be connected to the sensor 1 shown in FIG. 1A in the following manner: the voltage output device of the processing circuit is connected to the sensor 1 to provide a direct voltage of Vcc to the sensor 1. The current detection device of the processing circuit may detect a current flowing through the second conductive layer 122. The current serves as a parameter related to resistance of the second conductive layer 122. By analyzing the current flowing through the second conductive layer 122 and a change thereof, a change in resistance may be determined, and the bending angle of the sensor 1 may accordingly be determined.

When the sensor 1 includes the second sensing structure 12', a lead wire may be extended respectively from the first conductive layer 121 of the first sensing structure 12, the first conductive layer 121' of the second sensing structure 12', and the flexible substrate 11 to be connected to the processing circuit, so as to read the parameter related to capacitance and resistance of the first sensing structure 12 and the parameter related to resistance of the second sensing structure 12'. Merely by way of example, the processing circuit may be connected to the sensor 1 shown in FIG. 1B in the following manner: one of the first conductive layer 121 of the first sensing structure 12 and the first conductive layer 121' of the second sensing structure 12' is connected to the voltage output device of the processing circuit, and the other is grounded. GND in the figures of the present disclosure indicates ground. The processing circuit provides a direct voltage of Vcc to the sensor 1. The flexible substrate 11 may be connected to a voltage detection device of the processing circuit to detect an output voltage Vout of the second conductive layer 122. The equivalent circuit is shown in FIG. 3, which is a voltage divider circuit. According to the voltage division formula, the output voltage Vout is obtained as follows:

$$\text{Vout} = \text{Vcc}\frac{RB1'}{RB1+RB1'} = \text{Vcc}\frac{L0+2\alpha t}{2L0} \qquad (3)$$

wherein Vout represents the output voltage of the first sensing structure 12; Vcc represents a direct voltage signal with a magnitude of Vcc; $L_0$ represents the initial length of the second conductive layer 122; d represents the thickness between the second conductive layer 122 and the symmetrical axis M of the sensor 1; and $\alpha$ represents the bending angle of the sensor 1. The output voltage Vout serves as a parameter related to resistance of the second conductive layer 122.

According to the above formula (3), it can be seen that the output voltage Vout is positively correlated with the bending angle $\alpha$. In other words, the greater the bending angle $\alpha$, the higher the output voltage. By analyzing the output voltage and a change thereof, a bending condition of the sensor 1 may be determined. For example, the bending angle $\alpha$ of the sensor 1 may be directly obtained by measuring the output voltage Vout of the first sensing structure 12.

The lead wire is extended respectively from the first conductive layer 121 and the flexible substrate 11 to be connected to a processing circuit, so as to read the parameter related to resistance of the second conductive layer 122. The processing circuit may determine a change in resistance of the second conductive layer 122 based on the parameter related to resistance. The change in resistance of the second conductive layer 122 reflects the bending angle of the sensor 1. Therefore, the bending deformation of the sensor 1 may be sensitively and accurately sensed by reading the parameter related to resistance of the second conductive layer 122.

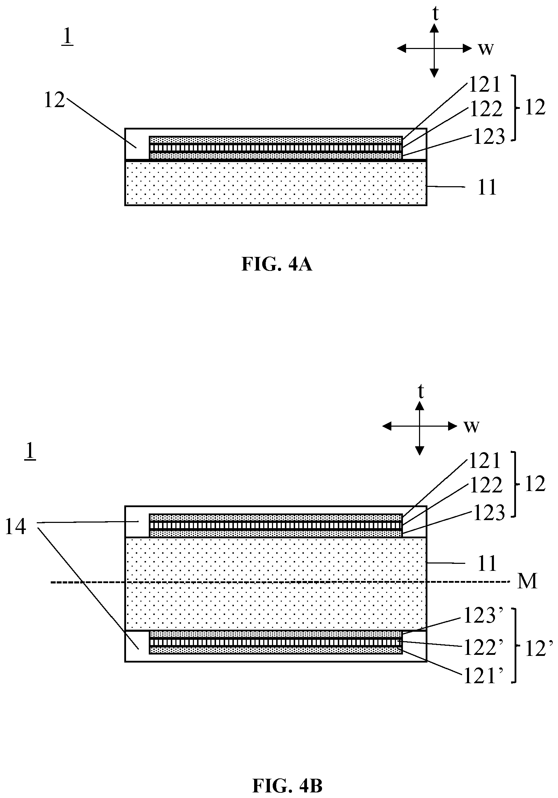

FIG. 4A is a schematic diagram illustrating a cross-section of the sensor 1 according to other embodiments of the present disclosure. In some embodiments, as shown in FIG. 4A, the multilayer structure further includes a third conductive layer 123, the first conductive layer 121, the second conductive layer 122, and the third conductive layer 123 are adjacently arranged in sequence along the thickness direction of the flexible substrate 11. The second conductive layer 122 and the third conductive layer 123 are both disposed between the first conductive layer 121 and the flexible substrate 11. An electrical conductivity of the third conductive layer 123 is greater than the electrical conductivity of the second conductive layer 122; and the electrical conductivity of the flexible substrate 11 is less than or equal to the electrical conductivity of the second conductive layer 122. In some embodiments, a lead wire may be extended respectively from the first conductive layer 121 and the third conductive layer 123 to be connected to a processing circuit, so as to read the parameter related to resistance of the second conductive layer 122. Since both the first conductive layer 121 and the third conductive layer 123 are disposed adjacent to the second conductive layer 122, the parameter related to resistance of the second conductive layer 122 may be conveniently extracted by extending lead wires from the first conductive layer 121 and the third conductive layer 123.

In the present embodiment, the flexible substrate 11 may include an insulating flexible material or a high-resistance flexible material. The electrical resistivity of the flexible substrate 11 is greater than or equal to the electrical resistivity of the second conductive layer 122. For specific descriptions regarding a material of the flexible substrate 11, reference may be made to the related descriptions below.

The third conductive layer 123 may be similar to the first conductive layer 121. For descriptions regarding the material and properties of the third conductive layer 123, reference may be made to the related descriptions above regarding the first conductive layer 121. Since the electrical conductivity of the first conductive layer 121 and the electrical conductivity of the third conductive layer 123 are greater than the electrical conductivity of the second conductive layer 122, when the electrical conductivity of the third conductive layer 123 and the electrical conductivity of the first conductive layer 121 are significantly greater than the electrical conductivity of the second conductive layer 122 (e.g., the electrical conductivity of the flexible substrate 11 and the electrical conductivity of the first conductive layer 121 are both greater than more than 100 times the electrical conductivity of the second conductive layer 122), the resistance of the first conductive layer 121 and the resistance of the third conductive layer 123 may be approximately negligible, and the resistance between the first conductive layer 121 and the flexible substrate 11 is approximately equal to the resistance between two surfaces of the second conductive layer 122 which are spaced apart along the thickness direction of the flexible substrate 11.

The connection relationship between the processing circuit and the sensor 1 in the embodiment corresponding to FIG. 4A is similar to the connection relationship between the processing circuit and the sensor 1 in the embodiment corresponding to FIG. 1A. The only difference lies in that: in the embodiment corresponding to FIG. 1A, the lead wire is extended respectively from the first conductive layer 121 and the flexible substrate 11 to be connected to the processing circuit, while in the embodiment corresponding to FIG. 4A, the lead wire is extended respectively from the first conductive layer 121 and the third conductive layer 123 to be connected to the processing circuit. In other words, the third conductive layer 123, which has a relatively high electrical conductivity, is configured to replace the flexible substrate 11 having a relatively high electrical conductivity. Accordingly, in the embodiment corresponding to FIG. 4A, the connection relationship between the processing circuit and the sensor 1 may refer to the connection relationship between the processing circuit and the sensor 1 in the embodiment corresponding to FIG. 1A.

Compared with the embodiment in which the electrical conductivity of the flexible substrate 11 is greater than the electrical conductivity of the second conductive layer 122, in the present embodiment, the third conductive layer 123 is additionally provided, and the lead wire is extended respectively from the third conductive layer 123 and the first conductive layer 121 to be connected to the processing circuit. As a result, no requirement is imposed on the electrical conductivity of the flexible substrate 11, and the flexible substrate 11 may be formed using a lower-cost insulating flexible material or a high-resistance flexible material.

FIG. 4B is a schematic cross-sectional view of the sensor 1 having two sensing structures according to other embodiments of the present disclosure. As shown in FIG. 4B, the second sensing structure 12' also includes a third conductive layer 123'. A structure and properties of the third conductive layer 123' of the second sensing structure 12' are similar to those of the third conductive layer 123 of the first sensing structure 12. For descriptions regarding the third conductive layer 123 of the first sensing structure 12, reference may be made to the related descriptions above. When the sensor 1 further includes the second sensing structure 12', a lead wire may be extended respectively from the first conductive layer 121 of the first sensing structure 12, the third conductive layer 123 of the first sensing structure 12, the first conductive layer 121' of the second sensing structure 12', and the third conductive layer 123' of the second sensing structure 12' to be connected to the processing circuit, so as to read the parameter related to resistance of the second conductive layer 122 of the first sensing structure 12 and the parameter related to resistance of the second conductive layer 122' of the second sensing structure 12'.

The connection relationship between the processing circuit and the sensor 1 in the embodiment corresponding to FIG. 4B is similar to the connection relationship between the processing circuit and the sensor 1 in the embodiment corresponding to FIG. 1B. The only difference lies in that: in the embodiment corresponding to FIG. 1B, the lead wire is extended respectively from the first conductive layer 121 and the flexible substrate 11 to be connected to the processing circuit, while in the embodiment corresponding to FIG. 4B, the lead wire is extended respectively from the first conductive layer 121 and the third conductive layer 123 to be connected to the processing circuit. Accordingly, in the embodiment corresponding to FIG. 4B, the connection relationship between the processing circuit and the sensor 1 may refer to the connection relationship (i.e., in FIG. 3) between the processing circuit and the sensor 1 shown in the embodiment corresponding to FIG. 1B.

In some embodiments, a relative dielectric constant of the second conductive layer 122 is greater than 3. The relative dielectric constant is a physical parameter that characterizes dielectric properties or polarization properties of a dielectric material, and a value of the relative dielectric constant is defined as a ratio of a capacitance of a capacitor formed using the corresponding material as a dielectric to a capacitance of a capacitor of the same size formed using vacuum as a dielectric. The value of the relative dielectric constant also represents an electric storage capability of a material, and is also referred to as relative permittivity. The material with a relative dielectric constant greater than 3 is a polar material. In other words, when the relative dielectric constant of the second conductive layer 122 is greater than 3, the second conductive layer 122 possesses a certain electric storage capability. Therefore, the second conductive layer 122 may be equivalent to a parallel combination of a resistive component and a capacitive component.

In some embodiments, the relative dielectric constant of the second conductive layer 122 may further be greater than or equal to 4. In some embodiments, the relative dielectric constant of the second conductive layer 122 is greater than 5. In some embodiments, the relative dielectric constant of the second conductive layer 122 is greater than 10.

By setting a relative dielectric constant of the second conductive layer 122 to be greater than 3, the second conductive layer 122 may serve both as a resistive component and as a capacitive component. During a bending process of the sensor 1, both a capacitance and a resistance of the second conductive layer 122 change with a deformation of the flexible substrate 11. Accordingly, a parameter related to capacitance and resistance of the second conductive layer 122 may reflect a bending condition of the sensor 1. In the present embodiment, the capacitance and the resistance are simultaneously present to reflect the bending condition of the sensor 1, which may significantly improve a sensitivity and an accuracy of the sensor 1.

In addition, by setting the resistance between two surfaces of the second conductive layer 122 which are spaced apart along the thickness direction of the flexible substrate 11 to be in a range of 1 MΩ to 10 GΩ, the second conductive layer 122 can exhibit desirable resistive performance as well as desirable capacitive performance, thereby ensuring a sensitivity and an accuracy of the sensor.

In some embodiments, the electrical conductivity of the flexible substrate 11 is greater than the electrical conductivity of the second conductive layer 122, and the second conductive layer 122 is disposed adjacent to the flexible substrate 11. In some embodiments, the lead wire is extended respectively from the first conductive layer 121 (e.g., the first conductive layer 121 of the first sensing structure 12) and the flexible substrate 11 to be connected to the processing circuit, so as to read a parameter related to capacitance and resistance of the second conductive layer 122. A structure of the sensor 1 in the present embodiment is similar to that of the sensor 1 in the embodiment corresponding to FIG. 1A. The only difference lies in that: in the present embodiment, the relative dielectric constant of the second conductive layer 122 is required to be greater than 3, and parameters read by the processing circuit are different.

Due to the electric storage capability of the second conductive layer 122, the second conductive layer 122 serves both as a resistive component and as a capacitive component, and a processing circuit may read a parameter related to capacitance and resistance of the second conductive layer 122. Since an electrical conductivity of the first conductive layer 121 and an electrical conductivity of the flexible substrate 11 are both greater than an electrical conductivity of the second conductive layer 122, when the electrical conductivity of the flexible substrate 11 and the electrical conductivity of the first conductive layer 121 are each significantly greater than the electrical conductivity of the second conductive layer 122, (e.g., the electrical conductivity of the flexible substrate 11 and the electrical conductivity of the first conductive layer 121 are greater than more than 100 times electrical conductivity of the second conductive layer 122), an equivalent resistance RB1 is formed between the first conductive layer 121 and the flexible substrate 11 by the second conductive layer 122. In addition, the relative dielectric constant of the second conductive layer 122 is greater than 3, the second conductive layer 122 between the first conductive layer 121 and the flexible substrate 11 further includes an equivalent capacitance CB1 connected in parallel with the equivalent resistance RB1, thereby forming a complex impedance in the sensor 1. The second conductive layer 122 is equivalent to a parallel-plate capacitor. The capacitance CB1 of the second conductive layer 122 satisfies:

$$CB1 = \varepsilon_r \varepsilon_0 \frac{S}{d} \ (4),$$

, where S represents the area of the second conductive layer 122, d represents the thickness of the second conductive layer 122, $\varepsilon_r$ represents a relative dielectric constant of the second conductive layer 122, and $\varepsilon_0$ represents a vacuum dielectric constant. It can be seen that the capacitance CB1 of the second conductive layer 122 is proportional to the area S of the second conductive layer 122. In combination with the related descriptions in FIG. 2A, the capacitance CB1 of the second conductive layer 122 is proportional to a length LB1 of the second conductive layer 122. The capacitance CB1 of the second conductive layer 122 is positively correlated with the bending angle $\alpha$ of the sensor 1. That is, the capacitance CB1 of the second conductive layer 122$\propto$S$\propto$L$\propto\alpha$.

A parameter related to capacitance and resistance of the second conductive layer 122 includes one or more of a voltage value, a resistance value, and a capacitance value. These parameters are capable of reflecting changes in capacitance and resistance of the second conductive layer 122 after a bending deformation of the sensor 1. The parameter related to capacitance and resistance of the second conductive layer 122 may be read by a processing circuit, such as a charging and discharging circuit. It should be noted that when the parameter related to capacitance and resistance of the second conductive layer 122 is read, the parameters may not be constant values, but values that vary over time. The time for the processing circuit to read the parameter related to capacitance and resistance of the second conductive layer 122 may be determined. For example, the processing circuit may be configured to read the parameter related to capacitance and resistance of the second conductive layer 122 at a plurality of time points.

Since both the capacitance and the resistance of the second conductive layer 122 change when a bending deformation of the sensor 1 occurs, the change in capacitance and in resistance of the second conductive layer 122, which are read by the processing circuit as the parameter related to capacitance and resistance of the second conductive layer 122, may jointly reflect a bending angle of the sensor 1. Accordingly, the bending deformation of the sensor 1 may be sensitively and accurately detected by reading the parameter related to capacitance and resistance of the second conductive layer 122.

In some embodiments, when the sensor 1 includes the second sensing structure 12', a lead wire may be extended respectively from the first conductive layer 121 of the first sensing structure 12, the first conductive layer 121' of the second sensing structure 12', and the flexible substrate 11 to be connected to the processing circuit, so as to read a parameter related to capacitance and resistance of the second conductive layer 122 of the first sensing structure 12 and a parameter related to capacitance and resistance of the second conductive layer 122' of the second sensing structure 12'. In this case, a capacitance CB1' of the second conductive layer 122' of the second sensing structure 12' may be determined according to a formula that is the same as formula (4) used to determine the capacitance CB1 of the second conductive layer 122 of the first sensing structure 12, i.e.,

$$CB1' = \varepsilon_r \varepsilon_0 \frac{S}{d} \ (5),$$

, where S represents an area of the second conductive layer 122', d represents a thickness of the second conductive layer 122', $\varepsilon_r$ represents a relative dielectric constant of the second conductive layer 122', and $\varepsilon_0$ represents a vacuum dielectric constant. It can be seen that the capacitance CB1' of the second conductive layer 122' is proportional to the area S of the second conductive layer 122'. In combination with the related descriptions in FIG. 2B, when the capacitance CB1' of the second conductive layer 122' is positively correlated with a length LB1' of the second conductive layer 122', the capacitance CB1' of the second conductive layer 122' is negatively correlated with a bending angle $\alpha$ of the sensor 1.

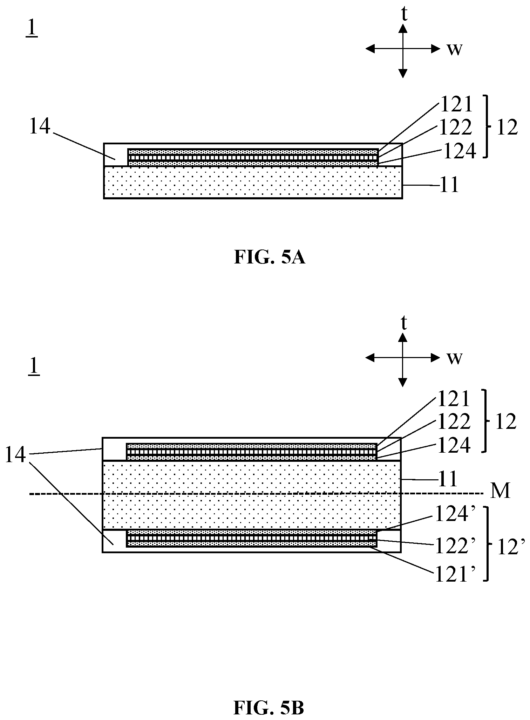

FIG. 5A is a schematic diagram illustrating a cross-section of a sensor according to other embodiments of the present disclosure. In some embodiments, as shown in FIG. 5A, the multilayer structure further includes a fourth conductive layer 124. The first conductive layer 121, the second conductive layer 122, and the fourth conductive layer 124 are adjacently arranged in sequence along the thickness direction of the flexible substrate 11. The second conductive layer 122 and the fourth conductive layer 124 are both disposed between the first conductive layer 121 and the flexible substrate 11. The electrical conductivity of the flexible substrate 11 is less than or equal to the electrical conductivity of the second conductive layer 122. The electrical conductivity of the fourth conductive layer 124 is greater than the electrical conductivity of the second conductive layer 122. In some embodiments, a lead wire is extended respectively from the first conductive layer 121 and the fourth conductive layer 124 to be connected to the processing circuit, so as to read the parameter related to capacitance and resistance of the second conductive layer 122. It should be noted that the fourth conductive layer 124 may be interchangeably used with the third conductive layer 123 as described above.

In the present embodiment, the flexible substrate 11 may include an insulating flexible material or a high-resistance flexible material. The resistivity of the flexible substrate 11 is greater than or equal to the resistivity of the second conductive layer 122. Further descriptions regarding the material of the flexible substrate 11 may be found in the following sections of the present disclosure.

The structure, performance, and other properties of the fourth conductive layer 124 are similar to those of the third conductive layer 123 as described above. Further descriptions regarding the fourth conductive layer 124 may be found in the related descriptions of the third conductive layer 123. The structure of the sensor 1 in the embodiment corresponding to FIG. 5A is similar to that in the embodiment corresponding to FIG. 4A. The only differences are that, in the embodiment corresponding to FIG. 5A, the relative dielectric constant of the second conductive layer 122 is required to be greater than 3, and parameters read by the processing circuit are different.

Since the electrical conductivity of the first conductive layer 121 and the electrical conductivity of the fourth conductive layer 124 are both greater than the electrical conductivity of the second conductive layer 122, when the electrical conductivity of the first conductive layer 121 and the electrical conductivity of the fourth conductive layer 124 are significantly greater than the electrical conductivity of the second conductive layer 122 (e.g., the electrical conductivity of the first conductive layer 121 and the electrical conductivity of the fourth conductive layer 124 are greater than more than 100 times the electrical conductivity of the second conductive layer 122), an equivalent resistance RB1 is formed by the second conductive layer 122 which is disposed between the first conductive layer 121 and the fourth conductive layer 124. In addition, since the relative dielectric constant of the second conductive layer 122 is greater than 3, the second conductive layer 122 disposed between the first conductive layer 121 and the fourth conductive layer 124 further forms an equivalent capacitance CB1 connected in parallel with the equivalent resistance RB1, so that the sensor 1 forms a complex impedance.

Compared with the embodiment in which the electrical conductivity of the flexible substrate 11 is greater than the electrical conductivity of the second conductive layer 122, in the present embodiment, a lead wire is extended respectively from the fourth conductive layer 124 and the first conductive layer 121 to be connected to the processing circuit, so that no specific requirement is imposed on the electrical conductivity of the flexible substrate 11. The flexible substrate 11 may be selected from an insulating flexible material or a high-resistance flexible material.

Merely by way of example, the processing circuit may be connected to the sensor 1 shown in FIG. 5A in the following manner: the voltage output device of the processing circuit is connected to the fourth conductive layer 124 via a fixed resistor with a resistance value of R0, so as to apply a pulse alternating voltage Vi with a peak voltage of Vcc to the second conductive layer 122. The first conductive layer 121 is grounded. The fourth conductive layer 124 may be connected to a voltage detection device to detect an output voltage Vout of the first sensing structure 12. The equivalent circuit is shown in FIG. 6A. With such a configuration, the processing circuit functions as a charging and discharging circuit. When each pulse signal is input, a charging and discharging signal is applied to the second conductive layer 122. This charging and discharging process is modulated by the resistance RB1 and the equivalent capacitance CB1 of the second conductive layer 122.

When the input signal Vi is a square-wave pulse with a peak value of Vcc,

$$\text{Vout} = \frac{RB1}{R0+RB1}\text{Vcc} * (1 - e^{-\frac{t}{R0CB1}}) \tag{6}$$

wherein the output voltage Vout represents the output voltage of the first sensing structure 12; Vcc represents the peak value of the square-wave pulse signal Vi; R0 represents the resistance value of the fixed resistor; RB1 represents the resistance value of the second conductive layer 122; CB1 represents the capacitance value of the second conductive layer 122; and t represents a measurement time. The output voltage of the first sensing structure 12 is related to the capacitance CB1 of the second conductive layer 122 and the resistance RB1 of the second conductive layer 122. According to the formula (1) of the resistance RB1 of the second conductive layer 122 described above, the resistance RB1 of the second conductive layer 122 of the first sensing structure 12 is negatively correlated with the bending angle $\alpha$. According to the formula (4) of the capacitance CB1 of the second conductive layer 122 described above, the capacitance CB1 of the second conductive layer 122 of the first sensing structure 12 is positively correlated with the bending angle $\alpha$. Further, according to the formula (6), the resistance RB1 of the second conductive layer 122 of the first sensing structure 12 is positively correlated with the output voltage Vout of the first sensing structure 12, and the capacitance CB1 of the second conductive layer 122 of the first sensing structure 12 is negatively correlated with the output voltage Vout of the first sensing structure 12. Therefore, the output voltage Vout of the first sensing structure 12 is negatively correlated with the bending angle $\alpha$. Accordingly, the bending condition (e.g., a bending angle and a bending direction) of the sensor 1 may be obtained by measuring and analyzing the output voltage Vout of the first sensing structure 12.

By reading the parameter related to capacitance and resistance of the second conductive layer 122 using the processing circuit, the parameters are modulated by both the resistance RB1 and the capacitance CB1 of the second conductive layer 122. This allows the parameter related to capacitance and resistance, as read by the processing circuit, to sensitively and accurately detect a bending deformation of the sensor 1. In addition, by grounding the first conductive layer 121, the first conductive layer 121 may serve as an electrical shielding layer, which may shield the sensor 1 from interference sources such as a human body and improve a stability of the sensor 1.

FIG. 5B is a schematic diagram illustrating a cross-section of the sensor 1 having two sensing structures according to other embodiments of the present disclosure. As shown in FIG. 5B, the second sensing structure 12' also includes a fourth conductive layer 124'. The fourth conductive layer 124' of the second sensing structure 12' has a structure and performance similar to those of the fourth conductive layer 124 of the first sensing structure 12. More descriptions may be found in the related descriptions of the fourth conductive layer 124 of the first sensing structure 12. When the sensor 1 further includes the second sensing structure 12', a lead wire may be extended respectively from the first conductive layer 121 of the first sensing structure 12, the fourth conductive layer 124 of the first sensing structure 12, the first conductive layer 121' of the second sensing structure 12', and the fourth conductive layer 124' of the second sensing structure 12' to be connected to the processing circuit, so as to read the parameter related to resistance of the second conductive layer 122 of the first sensing structure 12 and the parameter related to resistance of the second conductive layer 122' of the second sensing structure 12'.

Merely by way of example, the processing circuit may be connected to the sensor 1 shown in FIG. 5B in the following manner: the voltage output device of the processing circuit is connected to the second conductive layer 122 of the first sensing structure 12 via a fixed resistor with a resistance value of R0, and the voltage output device of the processing circuit is also connected to the second conductive layer 122' of the second sensing structure 12' via another fixed resistor with a resistance value of R0', so as to apply a pulse alternating voltage Vi with a peak voltage of Vcc to both the second conductive layer 122 of the first sensing structure 12 and the second conductive layer 122' of the second sensing structure 12'. The first conductive layer 121 of the first sensing structure 12 is grounded, and the first conductive layer 121' of the second sensing structure 12' is also grounded. The fourth conductive layer 124 of the first sensing structure 12 and the fourth conductive layer 124' of the second sensing structure 12' may be connected to a voltage detection device, so as to detect the output voltage Vout of the first sensing structure 12 and an output voltage Vout' of the second sensing structure 12', respectively. An equivalent circuit is shown in FIG. 6B. Since a structure of the sensor 1 in the embodiment corresponding to FIG. 5B is formed by further including, based on the structure of the sensor 1 in the embodiment corresponding to FIG. 5A, the second sensing structure 12' having a structure similar to that of the first sensing structure 12, the equivalent circuit in FIG. 6B operates based on a principle similar to that of the equivalent circuit shown in FIG. 6A. When the input signal Vi is a square-wave pulse with a peak value of Vcc,

$$\text{Vout}' = \frac{\text{RB1}'}{\text{R0}' + \text{RB1}'} \text{Vcc} * \left(1 - e^{-\frac{t}{\text{R0CB1}'}}\right) \tag{7}$$

wherein Vout' represents the output voltage of the second sensing structure 12'; Vcc represents the peak value of the square-wave pulse signal Vi; R0' represents the resistance value of the fixed resistor; RB1' represents a resistance value of the second conductive layer 122' of the second sensing structure 12'; CB1' represents a capacitance value of the second conductive layer 122' of the second sensing structure 12'; and t represents a measurement time. The output voltage of the second sensing structure 12' is related to the capacitance CB1' and the resistance RB1' of the second conductive layer 122' of the second sensing structure 12'. According to formula (2) of the resistance RB1' of the second conductive layer 122' described above, the resistance RB1' of the second conductive layer 122' of the second sensing structure 12' is negatively correlated with the bending angle $\alpha$. According to the calculation formula (5) of the capacitance CB1' of the second sensing structure 12' described above, the capacitance CB1' of the second resistance layer of the second sensing structure 12' is positively correlated with the bending angle $\alpha$. According to the above formula (7), the resistance RB1' of the second conductive layer 122' of the second sensing structure 12' is positively correlated with the output voltage Vout' of the second sensing structure 12', and the capacitance CB1' of the second conductive layer 122' of the second sensing structure 12' is negatively correlated with the output voltage Vout' of the sensor 1. Therefore, the output voltage Vout' of the second sensing structure 12' is positively correlated with the bending angle $\alpha$. Accordingly, a bending condition (e.g., a bending angle and a bending direction) of the sensor 1 may be obtained by measuring and analyzing the output voltage Vout' of the second sensing structure 12'.

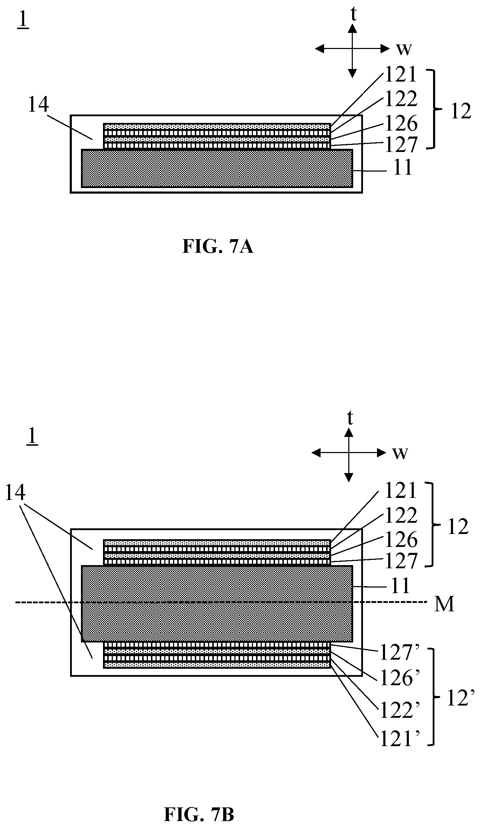

FIG. 7A is a schematic diagram illustrating a cross-section of a sensor according to other embodiments of the present disclosure. In some embodiments, as shown in FIG. 7A, the multilayer structure further includes another first conductive layer 126 and another second conductive layer 127; the electrical conductivity of the flexible substrate 11, the electrical conductivity of the first conductive layer 121, and an electrical conductivity of the first conductive layer 126 are greater than the electrical conductivity of the second conductive layer 122, and the electrical conductivity of the flexible substrate 11, the electrical conductivity of the first conductive layer 121, and the electrical conductivity of the first conductive layer 126 are greater than an electrical conductivity of the second conductive layer 127. The first conductive layer 121, the second conductive layer 122, the first conductive layer 126, and the second conductive layer 127 are adjacently arranged in sequence along the thickness direction of the flexible substrate 11; and the second conductive layer 127 is disposed adjacent to the flexible substrate 11. In some embodiments, the first conductive layer 121, the first conductive layer 126, and the flexible substrate 11 are each provided with a lead wire to be connected to the processing circuit, so as to read parameters related to capacitance and resistance of the second conductive layer 122 and the second conductive layer 127. The first conductive layer 121 and the first conductive layer 126 may serve as electrodes and be configured to facilitate extraction of signals related to capacitance and resistance of the second conductive layer 122; the first conductive layer 126 and the flexible substrate 11 may serve as electrodes and be configured to facilitate extraction of signals related to capacitance and resistance of the second conductive layer 127.

In the present embodiment, the flexible substrate 11 may include a flexible material filled with conductive particles. More descriptions regarding the material of the flexible substrate 11 may be found in related contents below.

The arrangement that the first conductive layer 121, the second conductive layer 122, the another first conductive layer 126, and the second conductive layer 127 are adjacently arranged in sequence along a thickness direction of the flexible substrate 11 may be understood as follows: one side surface of the second conductive layer 122 is disposed adjacent to the first conductive layer 121, another side surface of the second conductive layer 122 is disposed adjacent to the first conductive layer 126, one side surface of the second conductive layer 127 is disposed adjacent to the first conductive layer 126, and another side surface of the second conductive layer 127 is disposed adjacent to the flexible substrate 11. Since the electrical conductivity of the first conductive layer 121, the electrical conductivity of the first conductive layer 126, and the electrical conductivity of the flexible substrate 11 are each greater than the electrical conductivity of the second conductive layer 122 and the electrical conductivity of the second conductive layer 127, when the electrical conductivity of the first conductive layer 121, the electrical conductivity of the first conductive layer 126, and the electrical conductivity of the flexible substrate 11 are significantly greater than the electrical conductivity of the second conductive layer 122 and the electrical conductivity of the second conductive layer 127 (e.g., the electrical conductivity of the first conductive layer 121, the electrical conductivity of the first conductive layer 126, and the electrical conductivity of the flexible substrate 11 are greater than more than 100 times the electrical conductivity of the second conductive layer 122 and the electrical conductivity of the second conductive layer 127), the resistance of the first conductive layer 121, a resistance of the first conductive layer 126, and the resistance of the flexible substrate 11 may be approximately negligible, so that an equivalent parallel resistance RB1//RB2 is formed between the first conductive layer 121 and the flexible substrate 11. Furthermore, since the relative dielectric constant of the second conductive layer 122 and a relative dielectric constant of the second conductive layer 127 are each greater than 3, an equivalent parallel capacitance CB1//CB2 that is in parallel with the equivalent parallel resistance RB1//RB2 is further formed between the first conductive layer 121 and the flexible substrate 11.

Through such a configuration, the second conductive layer 122 and the second conductive layer 127 may be equivalent to two capacitors connected in parallel. Compared with a technical solution in which a parameter related to capacitance and resistance of the second conductive layer 122 of the sensor 1 in the embodiment corresponding to FIG. 1A is read by a processing circuit, the total capacitance of the sensor 1 is increased. Due to the increase in total capacitance, both the accuracy and sensitivity of the sensor 1 can be improved.

In some embodiments, the first conductive layer 121 and the flexible substrate 11 are grounded; and the first conductive layer 126 is connected to the voltage output device of the processing circuit via a fixed resistor, so as to provide a pulse voltage Vi with a peak value of Vcc to the second conductive layer 122 and the second conductive layer 127. The first conductive layer 121, the first conductive layer 126, and the flexible substrate 11 are each provided with a lead wire to be connected to the processing circuit, so as to read parameters related to capacitance and resistance of the second conductive layer 122 and the second conductive layer 127. Merely by way of example, the fourth conductive layer 124 may be connected to a voltage detection device to detect an output voltage Vout of the sensor 1. The equivalent circuit thereof is illustrated in FIG. 8A.

In addition, in the present embodiment, the grounding of the flexible substrate 11 may fully shield the two sensing structures (i.e., the first sensing structure 12 and the second sensing structure 12'), so as to reduce mutual interference between the two sensing structures caused by coupling capacitance and improve a reliability of the sensor 1.

FIG. 7B is a schematic diagram illustrating a cross-section of the sensor 1 having two sensing structures according to other embodiments of the present disclosure. As shown in FIG. 7B, the second sensing structure 12' also includes another first conductive layer 126' and another second conductive layer 127'. A structure and performance of the first conductive layer 126' of the second sensing structure 12' are similar to those of the first conductive layer 126 of the first sensing structure 12; and a structure and performance of the second conductive layer 127' of the second sensing structure 12' are similar to those of the second conductive layer 127 of the first sensing structure 12. More descriptions thereof may be found in related contents of the first conductive layer 126 and the second conductive layer 127 of the first sensing structure 12. When the sensor 1 further includes the second sensing structure 12', the first conductive layer 121 of the first sensing structure 12, the first conductive layer 121' of the second sensing structure 12', and the flexible substrate 11 may each be provided with a lead wire to be connected to a processing circuit, so as to read a parameter related to capacitance and resistance of the second conductive layer 122 of the first sensing structure 12 and a parameter related to capacitance and resistance of the second conductive layer 122' of the second sensing structure 12'.

In some embodiments, the first conductive layer 121 of the first sensing structure 12, the first conductive layer 121' of the second sensing structure 12', and the flexible substrate 11 are grounded; the first conductive layer 126 of the first sensing structure 12 and the first conductive layer 126' of the second sensing structure 12' are each connected to a voltage output device of the processing circuit via a fixed resistor, so as to provide a pulse voltage Vi with a peak value of Vcc to the second conductive layer 122 and the second conductive layer 127 of the first sensing structure 12 and to the second conductive layer 122' and the second conductive layer 127' of the second sensing structure 12'. The first conductive layer 121 of the first sensing structure 12, the first conductive layer 121' of the second sensing structure 12', and the flexible substrate 11 are each provided with a lead wire to be connected to the processing circuit, so as to read parameters related to capacitance and resistance of the second conductive layer 122 and the second conductive layer 127 of the first sensing structure 12 and parameters related to capacitance and resistance of the second conductive layer 122' and the second conductive layer 127' of the second sensing structure 12'. Merely by way of example, the first conductive layer 126 of the first sensing structure 12 and the first conductive layer 126' of the second sensing structure 12' may be connected to a voltage detection device to detect an output voltage Vout of the first sensing structure 12 and an output voltage Vout' of the second sensing structure 12'. The equivalent circuit thereof is illustrated in FIG. 8B.

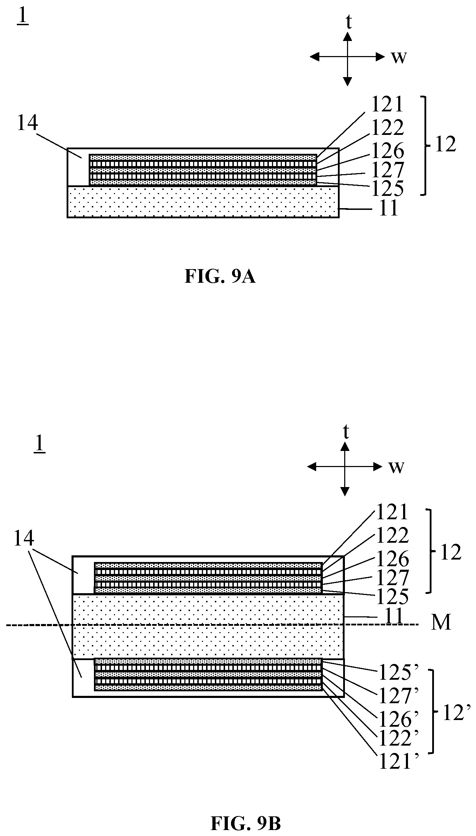

FIG. 9A is a schematic diagram illustrating a cross-section of a sensor according to other embodiments of the present disclosure. In some embodiments, as shown in FIG. 9A, the multilayer structure further includes another first conductive layer 126, another second conductive layer 127, and a fifth conductive layer 125. The first conductive layer 121, the second conductive layer 122, the first conductive layer 126, the second conductive layer 127, and the fifth conductive layer 125 are adjacently arranged in sequence along the thickness direction of the flexible substrate 11; the electrical conductivity of the flexible substrate 11 is less than or equal to the electrical conductivity of the second conductive layer 122, and the electrical conductivity of the flexible substrate 11 is less than or equal to the electrical conductivity of the second conductive layer 127. The electrical conductivity of the first conductive layer 121, an electrical conductivity of the fifth conductive layer 125, and the electrical conductivity of the first conductive layer 126 are each greater than the electrical conductivity of the second conductive layer 122; and the electrical conductivity of the fifth conductive layer 125, the electrical conductivity of the first conductive layer 121, and the electrical conductivity of the first conductive layer 126 are each greater than the electrical conductivity of the second conductive layer 127.

In the present embodiment, the flexible substrate 11 may include an insulating flexible material or a high-resistance flexible material. The resistivity of the flexible substrate 11 is greater than or equal to the resistivity of the second conductive layer 122. More descriptions regarding the material of the flexible substrate 11 may be found in the related descriptions below.

The configuration that the first conductive layer 121, the second conductive layer 122, the first conductive layer 126, the second conductive layer 127, and the fifth conductive layer 125 are adjacently arranged in sequence along the thickness direction of the flexible substrate 11 may be understood as follows: a side surface of the second conductive layer 122 is disposed adjacent to the first conductive layer 121, another side surface of the second conductive layer 122 is disposed adjacent to the first conductive layer 126, a side surface of the second conductive layer 127 is disposed adjacent to the first conductive layer 126, and another side surface of the second conductive layer 127 is disposed adjacent to the fifth conductive layer 125. Since the electrical conductivity of the first conductive layer 121, the electrical conductivity of the first conductive layer 126, and the electrical conductivity of the fifth conductive layer 125 are greater than the electrical conductivity of the second conductive layer 122 and the electrical conductivity of the second conductive layer 127, when the electrical conductivity of the first conductive layer 121, the electrical conductivity of the first conductive layer 126, and the electrical conductivity of the fifth conductive layer 125 are significantly greater than the electrical conductivity of the second conductive layer 122 and the electrical conductivity of the second conductive layer 127 (e.g., the electrical conductivity of the first conductive layer 121, the electrical conductivity of the first conductive layer 126, and the electrical conductivity of the fifth conductive layer 125 is greater than more than 100 times the electrical conductivity of the second conductive layer 122 and the electrical conductivity of the second conductive layer 127), the resistance of the first conductive layer 121, the resistance of the first conductive layer 126, and a resistance of the fifth conductive layer 125 may be approximately negligible. Accordingly, a parallel resistance RB1//RB2 may be formed between the first conductive layer 121 and the fifth conductive layer 125. Furthermore, since the relative dielectric constant of the second conductive layer 122 and the relative dielectric constant of the second conductive layer 127 are greater than 3, a parallel capacitance CB1//CB2, connected in parallel with the parallel resistance RB1//RB2, may be formed between the first conductive layer 121 and the fifth conductive layer 125.

The fifth conductive layer 125 may be similar to the first conductive layer 121 (or the third conductive layer 123 or the fourth conductive layer 124) in terms of material and performance. For more details regarding the material and performance of the fifth conductive layer 125, reference may be made to the relevant descriptions of the first conductive layer 121 (or the third conductive layer 123 or the fourth conductive layer 124) as described above.

With such a configuration, the second conductive layer 122 and the second conductive layer 127 may be equivalent to two capacitors connected in parallel. Compared with the technical solution in which the processing circuit reads a parameter related to capacitance and resistance of the second conductive layer 122 of the sensor 1 corresponding to FIG. 5A, the total capacitance of the sensor 1 may be increased. Due to the increase in the total capacitance, the accuracy and sensitivity of the sensor 1 may be improved. In addition, compared with the embodiment in which the electrical conductivity of the flexible substrate 11 is greater than the electrical conductivity of the second conductive layer 122 and the electrical conductivity of the second conductive layer 127, the present embodiment enables the first conductive layer 121 and the fifth conductive layer 125 to be connected to the processing circuit via lead wires respectively, without requiring the flexible substrate 11 to have a specific electrical conductivity, so that the flexible substrate 11 may be made of an insulating flexible material or a high-resistance flexible material.

In some embodiments, the first conductive layer 121 and the fifth conductive layer 125 are grounded, and a lead wire extending from the first conductive layer 126 is connected to a voltage output device of the processing circuit through a fixed resistor. In some embodiments, the first conductive layer 121, the first conductive layer 126, and the fifth conductive layer 125 are respectively connected to the processing circuit via lead wires to read parameters related to capacitance and resistance of the second conductive layer 122 and the second conductive layer 127. In the embodiment corresponding to FIG. 9A, a connection relationship between the processing circuit and the sensor 1 is similar to that in the embodiment corresponding to FIG. 7A. The only difference lies in that, in the embodiment corresponding to FIG. 7A, the first conductive layer 121, the first conductive layer 126, and the flexible substrate 11 are respectively connected to the processing circuit via lead wires, whereas in the present embodiment, the first conductive layer 121, the first conductive layer 126, and the fifth conductive layer 125 are respectively connected to the processing circuit via lead wires. That is, the fifth conductive layer 125 with a higher electrical conductivity replaces the flexible substrate 11 with a higher electrical conductivity. Therefore, the connection relationship between the processing circuit and the sensor 1 in the embodiment corresponding to FIG. 9A may be referred to the connection relationship between the processing circuit and the sensor 1 in the embodiment corresponding to FIG. 7A.

FIG. 9B is a schematic diagram illustrating a cross-section of a sensor having two sensing structures according to other embodiments of the present disclosure. In some embodiments, as shown in FIG. 9B, when the sensor 1 includes the second sensing structure 12', the second sensing structure 12' further includes another first conductive layer 126', another second conductive layer 127', and a fifth conductive layer 125'. A structure and performance of the first conductive layer 126' of the second sensing structure 12' are similar to those of the first conductive layer 126 of the first sensing structure 12. A structure and performance of the second conductive layer 127' of the second sensing structure 12' are similar to those of the second conductive layer 127 of the first sensing structure 12. A structure and performance of the fifth conductive layer 125' of the second sensing structure 12' are similar to those of the fifth conductive layer 125 of the first sensing structure 12. Please refer to the relevant descriptions of the first sensing structure 12. When the sensor 1 further includes the second sensing structure 12', the first conductive layer 121 of the first sensing structure 12, the first conductive layer 126 of the first sensing structure 12, the fifth conductive layer 125 of the first sensing structure 12, the first conductive layer 121' of the second sensing structure 12', the first conductive layer 126' of the second sensing structure 12', and the fifth conductive layer 125' of the second sensing structure 12' may be respectively connected to a processing circuit via lead wires, so as to read a parameter related to capacitance and resistance of the second conductive layer 122 of the first sensing structure 12, and a parameter related to capacitance and resistance of the second conductive layer 122' of the second sensing structure 12'.

In some embodiments, the first conductive layer 121 of the first sensing structure 12, the first conductive layer 121' of the second sensing structure 12', the fifth conductive layer 125 of the first sensing structure 12, and the fifth conductive layer 125' of the second sensing structure 12' are grounded. The first conductive layer 126 of the first sensing structure 12 and the first conductive layer 126' of the second sensing structure 12' are connected to a voltage output device of the processing circuit through fixed resistors, respectively, to apply a pulse alternating voltage Vi with a peak voltage of Vcc to the second conductive layer 122 and the second conductive layer 127. The first conductive layer 121 of the first sensing structure 12, the first conductive layer 126 of the first sensing structure 12, the first conductive layer 121' of the second sensing structure 12', the first conductive layer 126' of the second sensing structure 12', the fifth conductive layer 125 of the first sensing structure 12, and the fifth conductive layer 125' of the second sensing structure 12' are respectively connected to the processing circuit via lead wires, to read parameters related to capacitance and resistance of the second conductive layer 122 and the second conductive layer 127 of the first sensing structure 12, and parameters related to capacitance and resistance of the second conductive layer 122' and the second conductive layer 127' of the second sensing structure 12'. Merely by way of example, the first conductive layer 126 of the first sensing structure 12 and the first conductive layer 126' of the second sensing structure 12' may be connected to a voltage detection device to detect the output voltage Vout of the first sensing structure 12 and the output voltage Vout' of the second sensing structure 12'.

In some embodiments, the voltage output device of the processing circuit outputs a pulse voltage. The parameters related to capacitance and resistance include voltage values at a plurality of time points. The voltage values at a plurality of time points are voltage values read at a plurality of different time points by the voltage detection device of the processing circuit based on the pulse voltage output to the sensor 1 by the voltage output device of the processing circuit. By substituting the time at which the voltage value is read into the above-described formula (6) or (7), an output voltage Vout of the first sensing structure 12 or an output voltage Vout' of the second sensing structure 12' at a corresponding time point may be determined.

In some embodiments, an amplitude of a saturation voltage on the second conductive layer 122 is smaller than an amplitude of the pulse voltage. The amplitude of the saturation voltage refers to a voltage value that the second conductive layer 122 may reach after being charged for a sufficient period of time (since the second conductive layer 122 has capacitive characteristics). In the embodiments in which the processing circuit reads a parameter related to capacitance and resistance of the second conductive layer 122, since the second conductive layer 122 may be equivalent to a parallel combination of a resistive component and a capacitive component, the resistance of the second conductive layer 122 cannot be considered infinite. This affects the output voltage Vout of the first sensing structure 12 and the output voltage Vout' of the second sensing structure 12', resulting in an amplitude of the saturation voltage on the second conductive layer 122 smaller than the amplitude of the pulse voltage.

In some embodiments, the amplitude of the saturation voltage of the second conductive layer 122 of the first sensing structure 12 is different from an amplitude of a saturation voltage of the second conductive layer 122' of the second sensing structure 12'. In some embodiments, when the sensor 1 is bent, the second conductive layer 122 of the first sensing structure 12 and the second conductive layer 122' of the second sensing structure 12' change differently. For example, when the sensor 1 is bent toward the side where the second sensing structure 12' is located, the area of the second conductive layer 122 of the first sensing structure 12 increases and the resistance decreases; the area of the second conductive layer 122' of the second sensing structure 12' decreases and the resistance increases. This results in a difference between the saturation voltage amplitude of the second conductive layer 122 of the first sensing structure 12 and the saturation voltage amplitude of the second conductive layer 122' of the second sensing structure 12'.

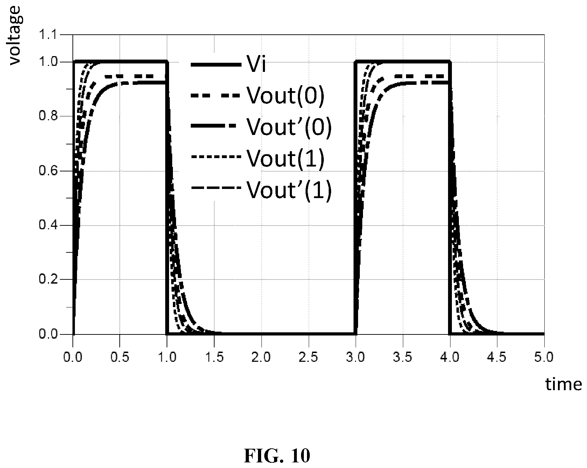

Merely for illustrative purposes, under square wave excitation, in a technical solution in which a parameter related to capacitance and resistance of the second conductive layer 122 is read by the processing circuit (i.e., a composite impedance solution), a curve of the output voltage of the first sensing structure 12 is shown as curve Vout(0) in FIG. 10, and a curve of the output voltage of the second sensing structure 12' is shown as curve Vout'(0) in FIG. 10. For comparison, under square wave excitation, in a technical solution in which parameters of a second conductive layer having only capacitive performance but not resistive performance are read by the processing circuit, a curve of the output voltage of the first sensing structure is shown as curve Vout(1) in FIG. 10, and a curve of the output voltage of the second sensing structure is shown as curve Vout'(1). In addition, it should be noted that FIG. 10 is a graph in which the horizontal axis represents time and the vertical axis represents voltage, wherein Vi denotes an amplitude of the square wave.

As shown in FIG. 10, when the charging time is sufficiently long to cause the output to reach the amplitude of the saturation voltage, in the technical solution in which a parameter related to capacitance and resistance of the second conductive layer 122 is read by the processing circuit, the relationship among the saturation output voltage of the first sensing structure 12, the saturation output voltage of the second sensing structure 12', and the amplitude of the square wave is: Vout(0) ≠ Vout'(0), and Vout(0) < Vi, Vout'(0) < Vi. In the technical solution in which the processing circuit reads parameters of a second conductive layer having only capacitive performance but not resistive performance, the relationship among the saturation output voltage of the first sensing structure 12, the saturation output voltage of the second sensing structure 12', and the amplitude of the square wave is: Vout(1) = Vout'(1) = Vi. It can thus be seen that, in the two technical solutions, the output voltage of the first sensing structure 12 and the output voltage of the second sensing structure 12' are both different.

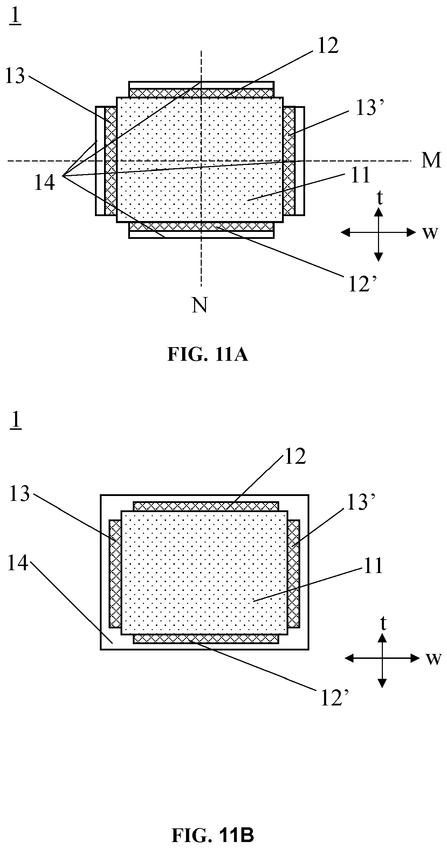

FIGs. 11A to 11C are schematic diagrams illustrating a cross-section of the sensor 1 including a third sensing structure 13 and a fourth sensing structure 13' according to some embodiments of the present disclosure. In some embodiments, as shown in FIGs. 11A to 11C, the sensor 1 further includes the third sensing structure 13 and the fourth sensing structure 13'. The third sensing structure 13 includes a multilayer structure disposed on a side surface of the flexible substrate 11 along a width direction; the fourth sensing structure 13' includes a multilayer structure disposed on another side surface of the flexible substrate 11 along the width direction; each layer of the multilayer structure of the third sensing structure 13 is stacked along the width direction of the flexible substrate 11, and each layer of the multilayer structure of the fourth sensing structure 13' is stacked along the width direction of the flexible substrate 11. That is, the third sensing structure 13 and the fourth sensing structure 13' are respectively disposed on two sides of the flexible substrate 11 in the width direction. The width direction of the flexible substrate 11 may be the w direction in the drawings (e.g., FIGs. 11A to 11C).

In some embodiments, structures of the third sensing structure 13 and the fourth sensing structure 13' may be similar. The multilayer structures of the third sensing structure 13 and the fourth sensing structure 13' both include a sixth conductive layer and a seventh conductive layer, and the sixth conductive layer and the seventh conductive layer are disposed adjacent to each other. An electrical conductivity of the sixth conductive layer is greater than an electrical conductivity of the seventh conductive layer, and the seventh conductive layer is disposed between the sixth conductive layer and the flexible substrate 11; and a resistance of the seventh conductive layer changes with a deformation of the flexible substrate 11. The sixth conductive layer is similar to the first conductive layer 121, and the seventh conductive layer is similar to the second conductive layer 122. For detailed descriptions, reference may be made to the above related descriptions.

The third sensing structure 13 and the fourth sensing structure 13' are sensing structures of the sensor 1 configured to detect a bending deformation along the width direction (i.e., the w direction). The third sensing structure 13 and the fourth sensing structure 13' may include the multilayer structure described in any of the above embodiments. It should be noted that, in the present embodiment, the width direction and the thickness direction may be interpreted in a generalized manner. The width direction may refer to a direction different from (i.e., not parallel to) the thickness direction. For example, an angle of 40° may exist between the width direction and the thickness direction. As another example, an angle of 75° may exist between the width direction and the thickness direction. In some cases, the width direction may be perpendicular to the thickness direction.

In some embodiments, the sensor 1 may be in a symmetrical structure along the width direction of the flexible substrate 11. The axis of symmetry may be the dashed line N shown in FIG. 11A. In other words, the third sensing structure 13 and the fourth sensing structure 13' include the same components, and the structures and dimensions of the components included in the third sensing structure 13 and the fourth sensing structure 13' are also the same.

By providing four sensing structures (i.e., the first sensing structure 12, the second sensing structure 12', the third sensing structure 13, and the fourth sensing structure 13'), the sensor 1 may be sensitive to the deformation (e.g., the bending deformation) in different directions (i.e., the width direction and the thickness direction). In other words, the configuration of the first sensing structure 12 and the second sensing structure 12' may enable the sensor 1 to be sensitive to bending in the thickness direction, while the configuration of the third sensing structure 13 and the fourth sensing structure 13' may enable the sensor 1 to be sensitive to bending in the width direction. When the width direction is perpendicular to the thickness direction, the sensor 1 may detect the bending deformation in two perpendicular directions.

In some embodiments, a ratio of a thickness to a width of the flexible substrate 11 is in a range of 0.2 to 5. In some embodiments, the ratio of the thickness to the width of the flexible substrate 11 is in a range of 0.3 to 3. In some embodiment, by setting the ratio of the thickness to the width of the flexible substrate 11 in a range of 0.3 to 3, bending deformations in both the thickness direction and the width direction of the sensor 1 may be accurately and sensitively sensed.

In some embodiments, the first conductive layer 121, the second conductive layer 122, and the flexible substrate 11 each include an elastic material. The elastic material may allow the first conductive layer 121, the second conductive layer 122, and the flexible substrate 11 to return to their original shapes after an external force is removed. In some embodiments, other conductive layers in the sensor 1 (e.g., the third conductive layer 123, the fourth conductive layer 124, the fifth conductive layer 125, the first conductive layer 126, and/or the second conductive layer 127) include an elastic material. In some embodiments, the elastic material includes silicone, rubber, polydimethylsiloxane (PDMS), polyurethane, styrene-butadiene-styrene (SBS), or the like.

In some embodiments, the elastic material of the first conductive layer 121 and the elastic material of the second conductive layer 122 are both filled with conductive particles; a density of the conductive particles filled in the elastic material of the first conductive layer 121 is greater than a density of the conductive particles filled in the elastic material of the second conductive layer 122. By adjusting the density of the conductive particles filled in the elastic material, an electrical conductivity of the corresponding conductive layer can be regulated. In some embodiments, the conductive particles comprise carbon nanotubes, silver nanowires, carbon black, graphite powder, graphene, or the like. By configuring the density of the conductive particles filled in the elastic material of the first conductive layer 121 to be greater than a density of the conductive particles filled in the elastic material of the second conductive layer 122, the electrical conductivity of the first conductive layer 121 may be greater than the electrical conductivity of the second conductive layer 122.

In some embodiments, elastic materials of other conductive layers in the sensor 1 (e.g., the third conductive layer 123, the fourth conductive layer 124, the fifth conductive layer 125, the first conductive layer 126, and/or the second conductive layer 127) are also filled with conductive particles. Additionally, a density of the conductive particles may be adjusted according to a required electrical conductivity of a corresponding conductive layer.

In some embodiments, when another conductive structure is disposed between the second conductive layer 122 and the flexible substrate 11, the flexible substrate 11 is preferably made of an insulating material. The other conductive structure may include, for example, the third conductive layer 123, the fourth conductive layer 124, the fifth conductive layer 125, or the like. In other words, the flexible substrate 11 is configured as a structure that is substantially non-conductive during operation of the sensor 1. Since the other conductive structure disposed between the second conductive layer 122 and the flexible substrate 11 may serve as an electrode, forming the flexible substrate 11 using an insulating material can prevent the flexible substrate 11 from conducting electricity and interfering with normal operation of the sensor 1. Therefore, the flexible substrate 11 made of an insulating material may ensure stable operation of the sensor 1 under the above circumstances.

In some embodiments, the thickness of the first conductive layer 121 may be greater than the thickness of the second conductive layer 122. In some embodiments, the thickness of the first conductive layer 121 may be approximately equal to the thickness of the second conductive layer 122. In some embodiments, the thickness of the flexible substrate 11 may be greater than the thickness of the first conductive layer 121. In some embodiments, the thickness of the flexible substrate 11 may be greater than the thickness of the second conductive layer 122.

In some embodiments, the thickness of the first conductive layer 121 may be in a range of 3 $\mu$m to 2000 $\mu$m. In some embodiments, the thickness of the first conductive layer 121 is in a range of 5 $\mu$m to 150 $\mu$m. In some embodiments, the thickness of the second conductive layer 122 is in a range of 3 $\mu$m to 200 $\mu$m. In some embodiments, the thickness of the second conductive layer 122 is in a range of 5 $\mu$m to 150 $\mu$m. The thinner the second conductive layer 122 is, the better its capacitive performance becomes, i.e., the closer the second conductive layer 122 is to a capacitance, resulting in more accurate sensing of the bending condition of the sensor 1 based on the parameter related to capacitance and resistance of the second conductive layer 122 read by the processing circuit. By setting the thickness of the second conductive layer 122 to be in a range of 5 $\mu$m to 150 $\mu$m, it is possible to ensure accuracy of the sensor 1 while avoiding excessive increases in processing difficulty and cost, thereby achieving performance assurance while reducing costs.

In some embodiments, the thickness of the flexible substrate 11 may be in a range of 200 $\mu$m to 5500 $\mu$m. In some embodiments, the thickness of the flexible substrate 11 is in a range of 300 $\mu$m to 5000 $\mu$m. The thicker the flexible substrate 11 is, the greater the change in the area of the second conductive layer 122 on the flexible substrate 11 under the same bending angle, and the greater the change in the resistance of the second conductive layer 122. As a result, the bending condition of the sensor 1 sensed based on the parameter related to capacitance or related to capacitance and resistance of the second conductive layer 122 read by the processing circuit becomes more accurate. By setting the range of the flexible substrate 11 to be in a range of 300 $\mu$m to 5000 $\mu$m, it is possible to ensure the accuracy of the sensor 1 while avoiding the situation where an excessively thick flexible substrate 11 limits body movement when the sensor is applied to intelligent wearable devices.

In some embodiments, the thickness range of the third conductive layer 123 may be similar to that of the first conductive layer 121. In some embodiments, the thickness range of the fourth conductive layer 124 may be similar to that of the first conductive layer 121. In some embodiments, the thickness range of the fifth conductive layer 125 may be similar to that of the first conductive layer 121. In some embodiments, the thickness range of the first conductive layer 126 may be similar to that of the first conductive layer 121. In some embodiments, the thickness range of the second conductive layer 127 may be similar to that of the first conductive layer 121.

In some embodiments, the width of the first conductive layer 121 is less than or equal to the width of the second conductive layer 122. In some embodiments, the width of the second conductive layer 122 is less than or equal to the width of the flexible substrate 11. In some embodiments, the width of the second conductive layer 122 is less than or equal to the width of the third conductive layer.

Through such width configuration, the signal of the second conductive layer 122 (e.g., a parameter related to resistance of the second conductive layer 122 or a parameter related to capacitance and resistance of the second conductive layer 122) can be stably obtained, while ensuring a regular and stable structure of the sensor, which allows the sensor, when applied to intelligent wearable devices, to provide a satisfactory user experience.

In some embodiments, the relationship between the width of the fourth conductive layer 124 and the width of the flexible substrate 11 or other conductive layers may be similar to the relationship between the width of the third conductive layer 123 and the width of the flexible substrate 11 or other conductive layers. In some embodiments, the relationship between the width of the fifth conductive layer 125 and the width of the flexible substrate 11 or other conductive layers may be similar to the relationship between the width of the third conductive layer 123 and the width of the flexible substrate 11 or other conductive layers. In some embodiments, the relationship between the width of the first conductive layer 126 and the width of the flexible substrate 11 or other conductive layers may be similar to the relationship between the width of the first conductive layer 121 and the width of the flexible substrate 11 or other conductive layers. In some embodiments, the relationship between the width of the second conductive layer 127 and the width of the flexible substrate 11 or other conductive layers may be similar to the relationship between the width of the second conductive layer 122 and the width of the flexible substrate 11 or other conductive layers. In some embodiments, the relationship between the width of the sixth conductive layer and the width of the flexible substrate 11 or other conductive layers may be similar to the relationship between the width of the first conductive layer 121 and the width of the flexible substrate 11 or other conductive layers. In some embodiments, the relationship between the width of the seventh conductive layer and the width of the flexible substrate 11 or other conductive layers may be similar to the relationship between the width of the second conductive layer 122 and the width of the flexible substrate 11 or other conductive layers.

In some embodiments, the sensor 1 further comprises a protective case 14. In certain embodiments, the protective case 14 is made of an insulating and elastic flexible material, or a high-resistance and elastic flexible material. The resistivity of the protective case 14 is greater than or equal to that of the conductive layer or the flexible substrate 11. The protective case 14 is configured to protect the sensor (e.g., the first sensing structure, the second sensing structure, the flexible substrate 11, etc.). The width of the protective case 14 may be greater than or equal to the maximum width of the multilayer structure.

In some embodiments, a first protection structure covers a side of the first conductive layer 121 away from the flexible substrate 11. The first protection structure is configured to isolate an outer surface (i.e., the surface away from the flexible substrate 11) of the first conductive layer 121 from an external environment. In some embodiments, an exposed surface of the flexible substrate 11 is covered with a second protection structure. The exposed surface of the flexible substrate 11 refers to a surface not covered with a sensing structure (e.g., the first sensing structure or the second sensing structure). In other words, all surfaces of the flexible substrate 11 not covered with a sensing structure are covered with the second protection structure, such that the flexible substrate 11 is isolated from the external environment. The first protection structure and the second protection structure are configured to ensure stable operation of the sensor. In particular, when the flexible substrate 11 serves as an electrode (i.e., the electrical conductivity of the flexible substrate 11 is greater than the electrical conductivity of the second conductive layer 122), direct exposure of the flexible substrate 11 to the external environment may cause interference with the sensing function of the sensor 1 or damage to the sensor. The second protection structure ensures safe and stable operation of the sensor. In some embodiments, as illustrated in FIG. 7A and FIG. 7B, the first protection structure and the second protection structure are combined to form the protective case 14. The protective case 14 is sleeved over an outer portion of the sensor 1. In some embodiments, the first protection structure and the second protection structure form an integrated protective case 14. It should be understood that each of the embodiments of the present disclosure may include the above-described first protection structure and second protection structure.

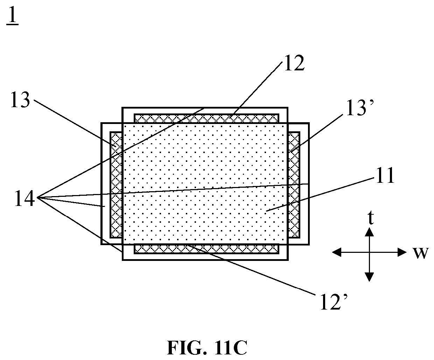

FIGs. 11A to 11C respectively illustrate three configurations of the protective case 14 when four sensing structures are disposed. In the embodiment shown in FIG. 11A, the protective case 14 includes a first protection structure configured to cover a side of the first conductive layer 121 away from the flexible substrate 11. In the embodiments shown in FIGs. 11B and 11C, the protective case 14 not only includes the first protection structure, but also includes a third protection structure configured to cover sides of all the sensing structures (e.g., the first sensing structure 12, the second sensing structure 12', the third sensing structure 13, and the fourth sensing structure 13') and the exposed surface of the flexible substrate 11. The difference between the embodiments of FIG. 11B and FIG. 11C lies in that, in the embodiment shown in FIG. 11B, adjacent third protection structures are connected into an integrated structure, such that the sensor 1 enclosed by the protective case 14 presents a regular rectangular shape.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or collocation of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer-readable program code embodied thereon.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, numbers describing the number of ingredients and attributes are used. It should be understood that such numbers used for the description of the embodiments use the modifier "about", "approximately", or "substantially" in some examples. Unless otherwise stated, "about", "approximately", or "substantially" indicates that the number is allowed to vary by ±20%. Correspondingly, in some embodiments, the numerical parameters used in the description and claims are approximate values, and the approximate values may be changed according to the required characteristics of individual embodiments. In some embodiments, the numerical parameters should consider the prescribed effective digits and adopt the method of general digit retention. Although the numerical ranges and parameters used to confirm the breadth of the range in some embodiments of the present disclosure are approximate values, in specific embodiments, settings of such numerical values are as accurate as possible within a feasible range.

For each patent, patent application, patent application publication, or other materials cited in the present disclosure, such as articles, books, specifications, publications, documents, or the like, the entire contents of which are hereby incorporated into the present disclosure as a reference. The application history documents that are inconsistent or conflict with the content of the present disclosure are excluded, and the documents that restrict the broadest scope of the claims of the present disclosure (currently or later attached to the present disclosure) are also excluded. It should be noted that if there is any inconsistency or conflict between the description, definition, and/or use of terms in the auxiliary materials of the present disclosure and the content of the present disclosure, the description, definition, and/or use of terms in the present disclosure is subject to the present disclosure.

Finally, it should be understood that the embodiments described in the present disclosure are only used to illustrate the principles of the embodiments of the present disclosure. Other variations may also fall within the scope of the present disclosure. Therefore, as an example and not a limitation, alternative configurations of the embodiments of the present disclosure may be regarded as consistent with the teaching of the present disclosure. Accordingly, the embodiments of the present disclosure are not limited to the embodiments introduced and described in the present disclosure explicitly.

**Claims**

1. A sensor, comprising:
   a flexible substrate and a first sensing structure, wherein

   the first sensing structure includes a multilayer structure disposed on a side surface of the flexible substrate along a thickness direction; and each layer of the multilayer structure of the first sensing structure is stacked along the thickness direction of the flexible substrate; and
   the multilayer structure of the first sensing structure includes a first conductive layer and a second conductive layer which are adjacently arranged in sequence; the second conductive layer is disposed between the first conductive layer and the flexible substrate; and a resistance of the second conductive layer changes with a deformation of the flexible substrate.

2. The sensor of claim 1, wherein a resistance between two surfaces of the second conductive layer which are spaced apart along the thickness direction of the flexible substrate is in a range of 1 MΩ to 10 GΩ.

3. The sensor of claim 1, wherein an electrical conductivity of the first conductive layer and an electrical conductivity of the flexible substrate are greater than an electrical conductivity of the second conductive layer; and the second conductive layer is disposed adjacent to the flexible substrate.

4. The sensor of claim 1, wherein the multilayer structure further includes a third conductive layer, the first conductive layer, the second conductive layer, and the third conductive layer are adjacently arranged in sequence along the thickness direction of the flexible substrate; the second conductive layer and the third conductive layer are both disposed between the first conductive layer and the flexible substrate; and
   an electrical conductivity of the first conductive layer and an electrical conductivity of the third conductive layer are greater than an electrical conductivity of the second conductive layer; and an electrical conductivity of the flexible substrate is less than or equal to the electrical conductivity of the second conductive layer.

5. The sensor of claim 3 or 4, wherein a parameter related to resistance of the second conductive layer is read by a processing circuit.

6. The sensor of claim 1, wherein a relative dielectric constant of the second conductive layer is greater than 3.

7. The sensor of claim 3 or 4, wherein a parameter related to capacitance and resistance of the second conductive layer is read by a processing circuit.

8. The sensor of claim 1, wherein the multilayer structure further includes another first conductive layer and another second conductive layer; an electrical conductivity of the flexible substrate, an electrical conductivity of the first conductive layer, and an electrical conductivity of the another first conductive layer are greater than an electrical conductivity of the second conductive layer and are greater than an electrical conductivity of the another second conductive layer; and
the first conductive layer, the second conductive layer, the another first conductive layer, and the another second conductive layer are adjacently arranged in sequence along the thickness direction of the flexible substrate; and the another second conductive layer is disposed adjacent to the flexible substrate.

9. The sensor of claim 8, wherein the first conductive layer and the flexible substrate are grounded; and the another first conductive layer is connected to a voltage output device of a processing circuit via a fixed resistor.

10. The sensor of claim 1, wherein the multilayer structure further includes another first conductive layer, another second conductive layer, and a fifth conductive layer;

   the first conductive layer, the second conductive layer, the another first conductive layer, the another second conductive layer, and the fifth conductive layer are adjacently arranged in sequence along the thickness direction of the flexible substrate; and
   an electrical conductivity of the flexible substrate is less than or equal to an electrical conductivity of the second conductive layer and is less than or equal to an electrical conductivity of the another second conductive layer; an electrical conductivity of the first conductive layer, an electrical conductivity of the fifth conductive layer, and an electrical conductivity of the another first conductive layer are greater than the electrical conductivity of the second conductive layer and are greater than the electrical conductivity of the another second conductive layer.

11. The sensor of claim 10, wherein the first conductive layer and the fifth conductive layer are grounded, and a lead wire extending from the another first conductive layer is connected to a voltage output device of a processing circuit through a fixed resistor.

12. The sensor of claim 8 or 10, wherein a relative dielectric constant of the another second conductive layer is greater than 3.

13. The sensor of claim 4 or 10, wherein the flexible substrate is made of an insulating material.

14. The sensor of claim 9 or 11, wherein parameters related to capacitance and resistance of the second conductive layer and the another second conductive layer are read by the processing circuit.

15. The sensor of claim 14, wherein the voltage output device of the processing circuit outputs a pulse voltage, and the parameters related to capacitance and resistance include voltage values at a plurality of time points.

16. The sensor of claim 15, wherein an amplitude of a saturation voltage on the second conductive layer is smaller than an amplitude of the pulse voltage.

17. The sensor of claim 1, further comprising:
a second sensing structure, wherein:

   the second sensing structure includes a multilayer structure disposed on another side surface of the flexible substrate along the thickness direction; each layer of the multilayer structure of the second sensing structure is stacked along the thickness direction of the flexible substrate; and
   the multilayer structure of the second sensing structure includes a first conductive layer and a second conductive layer, the first conductive layer and the second conductive layer of the second sensing structure are adjacently arranged; an electrical conductivity of the first conductive layer of the second sensing structure is greater than an electrical conductivity of the second conductive layer of the second sensing structure, and the second conductive layer of the second sensing structure is disposed between the first conductive layer of the second sensing structure and the flexible substrate; and a resistance of the second conductive layer of the second sensing structure changes with the deformation of the flexible substrate.

18. The sensor of claim 17, wherein detection parameters of the first sensing structure and the second sensing structure are read respectively by a processing circuit; wherein the detection parameters include a parameter related to resistance of the second conductive layer of the first sensing structure, or a parameter related to capacitance and resistance of the second conductive layer of the first sensing structure, or a parameter related to resistance of the second conductive layer of the second sensing structure, or a parameter related to capacitance and resistance of the second conductive layer of the second sensing structure; and
the processing circuit is configured to perform differential processing on the detection parameters of the first sensing structure and the second sensing structure, and determine a deformation parameter of the flexible substrate based on a result of the differential processing.

19. The sensor of claim 18, wherein an amplitude of a saturation voltage of the second conductive layer of the first sensing structure is different from an amplitude of a saturation voltage of the second conductive layer of the second sensing structure.

20. The sensor of claim 17, further comprising:
a third sensing structure and a fourth sensing structure; wherein:

the third sensing structure includes a multilayer structure disposed on a side surface of the flexible substrate along a width direction; the fourth sensing structure includes a multilayer structure disposed on another side surface of the flexible substrate along the width direction; each layer of the multilayer structure of the third sensing structure is stacked along the width direction of the flexible substrate, and each layer of the multilayer structure of the fourth sensing structure is stacked along the width direction of the flexible substrate; and
the multilayer structures of the third sensing structure and the fourth sensing structure both include a sixth conductive layer and a seventh conductive layer, and the sixth conductive layer and the seventh conductive layer are adjacently arranged; an electrical conductivity of the sixth conductive layer is greater than an electrical conductivity of the seventh conductive layer, and the seventh conductive layer is disposed between the sixth conductive layer and the flexible substrate; and a resistance of the seventh conductive layer changes with the deformation of the flexible substrate.

21. The sensor of claim 20, wherein the width direction is perpendicular to the thickness direction.

22. The sensor of claim 21, wherein a ratio of a thickness to a width of the flexible substrate is in a range of 0.3 to 3.

23. The sensor of claim 1, wherein each of the first conductive layer, the second conductive layer, and the flexible substrate includes an elastic material.

24. The sensor of claim 23, wherein the elastic material of the first conductive layer and the elastic material of the second conductive layer are both filled with conductive particles; a density of the conductive particles filled in the elastic material of the first conductive layer is greater than a density of the conductive particles filled in the elastic material of the second conductive layer.

25. The sensor of claim 1, wherein a thickness of the first conductive layer is in a range of 5 um to 150 um; or

a thickness of the second conductive layer is in a range of 5 um to 150 um; or
a thickness of the flexible substrate is in a range of 300 um to 5000 um.

26. The sensor of claim 1, wherein a width of the first conductive layer is less than or equal to a width of the second conductive layer; and the width of the second conductive layer is less than or equal to a width of the flexible substrate.

27. The sensor of claim 1, further comprising:
a first protection structure, wherein the first protection structure covers a side of the first conductive layer away from the flexible substrate.

28. The sensor of claim 1, wherein an exposed surface of the flexible substrate is covered with a second protection structure.

1

t

w

14

121
122
12

11

**FIG. 1A**

**FIG. 1B**

**FIG. 2A**

**FIG. 2B**

FIG. 2C

FIG. 3

1

t

w

121
122 } 12
123

12

11

**FIG. 4A**

t

w

121
122 } 12
123

1

14

11 ──── M

123'
122' } 12'
121'

**FIG. 4B**

1

t

w

14

121
122
124
} 12

11

**FIG. 5A**

t

w

1

121
122
124
} 12

11

M

124'
122'
121'
} 12'

14

**FIG. 5B**

**FIG. 6A**

**FIG. 6B**

1

t
w

14

121
122
126
127
} 12

11

**FIG. 7A**

1

t
w

14

121
122
126
127
} 12

11

M

127'
126'
122'
121'
} 12'

**FIG. 7B**

**FIG. 8A**

**FIG. 8B**

1

t

w

14

121
122
126
127
125

12

11

**FIG. 9A**

1

t

w

14

121
122
126
127
125

12

11

M

125'
127'
126'
122'
121'

12'

**FIG. 9B**

**FIG. 10**

FIG. 11A

FIG. 11B

<u>1</u>

**FIG. 11C**

## INTERNATIONAL SEARCH REPORT

| International application No. |
| --- |
| **PCT/CN2023/110335** |

| A. | CLASSIFICATION OF SUBJECT MATTER |
| --- | --- |

G01D 5/16(2006.01)i; G01B7/28(2006.01)i; G01B7/16(2006.01)i; G01B7/30(2006.01)i

According to International Patent Classification (IPC) or to both national classification and IPC

| B. | FIELDS SEARCHED |
| --- | --- |

Minimum documentation searched (classification system followed by classification symbols)

   IPC:G01D,G01B

Documentation searched other than minimum documentation to the extent that such documents are included in the fields searched

Electronic data base consulted during the international search (name of data base and, where practicable, search terms used)

   CNABS, CNKI, VEN, CNTXT, ENTXTC, Elsevier Science, ISI_Web of Science: 第二, 多个, 几个, 若干, 第三, 第四, 第五, 至少一个, 另一个, 导电层, 电导率, 电阻, 形变, 变形, 应变, second, multiple, several, third, fourth, fifth, at least one, another, conductive layers, conductivity, resistance, deformation, strain, base, substrate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106370327 A (SHENZHEN INSTITUTES OF ADVANCED TECHNOLOGY, CHINESE ACADEMY OF SCIENCES) 01 February 2017 (2017-02-01) description, paragraphs 5-67, and figures 1-11 | 1 |
| X | GB 8414622 D0 (TOKYO ELECTRIC CO., LTD.) 11 July 1984 (1984-07-11) description, column 2, line 1-column 5, line 1, and figures 1-6 | 1 |
| X | CN 108345407 A (DONGWOO FINE-CHEM CO., LTD.) 31 July 2018 (2018-07-31) description, paragraphs 13-63, and figures 1-4 | 1, 27 |
| X | RU 2367061 C1 (OBSHCHESTVO S OGRANICHENNOJ OTVETSTVENNOST'JU "SENSOR") 10 September 2009 (2009-09-10) description, page 2, line 5-page 4, last line, and figures 1-3 | 1.27 |
| X | RU 2367062 C1 (OBSHCHESTVO S OGRANICHENNOJ OTVETSTVENNOST'JU "SENSOR") 10 September 2009 (2009-09-10) description, page 2, line 2-page 3, last line, and figures 1-2 | 1, 27 |
| X | CN 103959028 A (TOKAI RUBBER INDUSTRIES, LTD.) 30 July 2014 (2014-07-30) description, paragraphs 8-131, and figures 1-6 | 1-3, 23, 25-28 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 April 2024** | **26 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/110335** |

**C.    DOCUMENTS CONSIDERED TO BE RELEVANT**

| Category* | Citation of document, with indication, where appropriate, of the relevant passages | Relevant to claim No. |
|---|---|---|
| Y | CN 103959028 A (TOKAI RUBBER INDUSTRIES, LTD.) 30 July 2014 (2014-07-30) description, paragraphs 8-131, and figures 1-6 | 4-22, 24 |
| Y | CN 116230786 A (HEFEI HUASHENG PHOTOVOLTAIC TECHNOLOGY CO., LTD.) 06 June 2023 (2023-06-06) description, paragraphs 4-187, and figures 1-3 | 4-5, 8-22 |
| Y | CN 108415630 A (SOLOMON SYSTECH (CHINA) LIMITED) 17 August 2018 (2018-08-17) description, paragraphs 53 and 57 | 6-7, 12 |
| Y | CN 107107434 A (3M INNOVATIVE PROPERTIES COMPANY) 29 August 2017 (2017-08-29) description, paragraphs 30 and 75 | 24 |
| A | CN 106525296 A (SHENZHEN RUIHU TECHNOLOGY CO., LTD.) 22 March 2017 (2017-03-22) entire document | 1-28 |
| A | CN 110097043 A (BOE TECHNOLOGY GROUP CO., LTD.) 06 August 2019 (2019-08-06) entire document | 1-28 |
| A | CN 117288354 A (SOFT ROBOT TECH CO., LTD.) 26 December 2023 (2023-12-26) entire document | 1-28 |
| A | CN 112066868 A (XI'AN JIAOTONG-LIVERPOOL UNIVERSITY) 11 December 2020 (2020-12-11) entire document | 1-28 |
| A | JP 2015072210 A (FUJIKURA LTD.) 16 April 2015 (2015-04-16) entire document | 1-28 |
| A | US 2008054875 A1 (IVI SMART TECHNOLOGIES, INC.) 06 March 2008 (2008-03-06) entire document | 1-28 |

Form PCT/ISA/210 (second sheet) (July 2022)

## INTERNATIONAL SEARCH REPORT
### Information on patent family members

| International application No. |
|---|
| **PCT/CN2023/110335** |

| Patent document cited in search report | | | Publication date (day/month/year) | Patent family member(s) | | | Publication date (day/month/year) |
|---|---|---|---|---|---|---|---|
| CN | 106370327 | A | 01 February 2017 | None | | | |
| GB | 8414622 | D0 | 11 July 1984 | JPS | 59230101 | A | 24 December 1984 |
| | | | | DE | 3421963 | A1 | 13 December 1984 |
| | | | | DE | 3421963 | C2 | 21 May 1992 |
| | | | | GB | 2142776 | A | 23 January 1985 |
| | | | | GB | 2142776 | B | 28 May 1987 |
| CN | 108345407 | A | 31 July 2018 | US | 2018211082 | A1 | 26 July 2018 |
| | | | | US | 10685203 | B2 | 16 June 2020 |
| | | | | KR | 20180086604 | A | 01 August 2018 |
| | | | | KR | 102054190 | B1 | 10 December 2019 |
| RU | 2367061 | C1 | 10 September 2009 | None | | | |
| RU | 2367062 | C1 | 10 September 2009 | None | | | |
| CN | 103959028 | A | 30 July 2014 | EP | 2924406 | A1 | 30 September 2015 |
| | | | | EP | 2924406 | A4 | 13 July 2016 |
| | | | | EP | 2924406 | B1 | 20 December 2017 |
| | | | | JP | 5853107 | B2 | 09 February 2016 |
| | | | | JPWO | 2014080467 | A1 | 05 January 2017 |
| | | | | WO | 2014080467 | A1 | 30 May 2014 |
| CN | 116230786 | A | 06 June 2023 | None | | | |
| CN | 108415630 | A | 17 August 2018 | GB | 201702117 | D0 | 29 March 2017 |
| | | | | GB | 2559575 | A | 15 August 2018 |
| | | | | GB | 2559575 | B | 26 February 2020 |
| | | | | US | 2018224966 | A1 | 09 August 2018 |
| | | | | US | 10452219 | B2 | 22 October 2019 |
| CN | 107107434 | A | 29 August 2017 | WO | 2016099955 | A1 | 23 June 2016 |
| | | | | MX | 2017007452 | A | 10 August 2017 |
| | | | | EP | 3234970 | A1 | 25 October 2017 |
| | | | | EP | 3234970 | A4 | 12 September 2018 |
| | | | | US | 2016181018 | A1 | 23 June 2016 |
| | | | | US | 10037850 | B2 | 31 July 2018 |
| | | | | JP | 2020205428 | A | 24 December 2020 |
| | | | | JP | 7067837 | B2 | 16 May 2022 |
| | | | | JP | 2018508118 | A | 22 March 2018 |
| | | | | JP | 6929220 | B2 | 01 September 2021 |
| | | | | KR | 20170095953 | A | 23 August 2017 |
| | | | | BR | 112017011402 | A2 | 27 February 2018 |
| CN | 106525296 | A | 22 March 2017 | US | 2020046236 | A1 | 13 February 2020 |
| | | | | US | 10842397 | B2 | 24 November 2020 |
| | | | | WO | 2018064989 | A1 | 12 April 2018 |
| | | | | WO | 2018064989 | A4 | 11 May 2018 |
| CN | 110097043 | A | 06 August 2019 | US | 2020348818 | A1 | 05 November 2020 |
| | | | | US | 10942600 | B2 | 09 March 2021 |
| CN | 117288354 | A | 26 December 2023 | None | | | |
| CN | 112066868 | A | 11 December 2020 | None | | | |
| JP | 2015072210 | A | 16 April 2015 | JP | 6167003 | B2 | 19 July 2017 |
| US | 2008054875 | A1 | 06 March 2008 | US | 8786033 | B2 | 22 July 2014 |
| | | | | US | 2015161430 | A1 | 11 June 2015 |

Form PCT/ISA/210 (patent family annex) (July 2022)